(19) Europäisches Patentamt
European Patent Office
Office européen des brevets

(11) EP 1 795 559 A1

(12) **EUROPEAN PATENT APPLICATION**
published in accordance with Art. 158(3) EPC

(43) Date of publication:
**13.06.2007 Bulletin 2007/24**

(21) Application number: **05785862.3**

(22) Date of filing: **22.09.2005**

(51) Int Cl.:
***C08L 65/00*** *(2006.01)* ***C08L 25/00*** *(2006.01)*
***C08L 33/18*** *(2006.01)* ***G02B 5/30*** *(2006.01)*

(86) International application number:
**PCT/JP2005/017535**

(87) International publication number:
**WO 2006/038478 (13.04.2006 Gazette 2006/15)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.10.2004 JP 2004290473**
**05.01.2005 JP 2005000919**

(71) Applicant: **JSR Corporation**
**Tokyo 104-0045 (JP)**

(72) Inventors:
- **OKANIWA, Motoki,**
**c/o JSR CORPORATION**
**Tokyo 1040045 (JP)**
- **MIYAMOTO, Yoshikazu,**
**c/o JSR CORPORATION**
**Tokyo 1040045 (JP)**
- **KAJIWARA, Ichiro,**
**c/o JSR CORPORATION**
**Tokyo 1040045 (JP)**
- **SUWA, Yoshimi,**
**c/o JSR CORPORATION**
**Tokyo 1040045 (JP)**
- **MIYAKI, Nobuyuki,**
**c/o JSR CORPORATION**
**Tokyo 1040045 (JP)**
- **KAWASHIMA, Naoyuki,**
**c/o JSR CORPORATION**
**Tokyo 1040045 (JP)**

(74) Representative: **TBK-Patent**
**Bavariaring 4-6**
**80336 München (DE)**

(54) **THERMOPLASTIC RESIN COMPOSITION, OPTICAL FILM AND RETARDATION FILM**

(57) Each of the thermoplastic resin composition and the optical film of the present invention comprises a cycloolefin-based polymer (A) and a vinyl-based polymer (B) having a structural unit derived from p-isopropenylphenol. The thermoplastic resin composition and the optical film exhibit excellent compatibility of their components with keeping property of low birefringence inherent in the thermoplastic resin composition comprising the cycloolefin-based polymer and the vinyl-based polymer, and they are excellent in weathering resistance and heat resistance.

EP 1 795 559 A1

## Description

### TECHNICAL FIELD

The present invention relates to a thermoplastic resin composition comprising a cycloolefin-based resin and a p-isopropenylphenol-based copolymer, and an optical film. The present invention also relates to a retardation film obtained by stretch-orienting the optical film.

### BACKGROUND ART

Cycloolefin-based ring-opened (co)polymers have merits such that they have high glass transition temperatures attributable to rigidity of the main chain structure, they are amorphous and have high light transmittance because a bulky group is present in the main chain structure and they exhibit property of low birefringence because of small anisotropy of birefringence, so that they have been paid attention as transparent thermoplastic resins having excellent heat resistance, transparency and optical properties.
The conventional cycloolefin-based ring-opened (co)polymers, however, do not have sufficiently low birefringence value, and accordingly, development of thermoplastic resin compositions having more excellent property of low birefringence has been desired.
In a patent document 1, a thermoplastic resin composition comprising a cycloolefin-based resin and an aromatic vinyl-based (co)polymer having a polar group is disclosed. It is also disclosed that this thermoplastic resin composition exhibits lower birefringence as compared with the conventional cycloolefin-based resins. The thermoplastic resin composition described in the patent document 1, however, has a problem of lowering of weathering resistance and heat resistance though it exhibits property of low birefringence.
In patent documents 2 and 3, a thermoplastic resin composition comprising a cycloolefin-based resin and a polystyrene-based polymer is disclosed. In the patent documents 2 and 3, however, a p-isopropenylphenol-based copolymer is not disclosed as the polystyrene-based polymer.
In recent years, development of various optical films has been made by taking advantage of features of cycloolefin-based resins or thermoplastic resin compositions containing them. Such optical films are usually produced by a solvent casting method using a solution obtained by dissolving a cycloolefin-based resin or a thermoplastic resin composition containing the resin in a solvent. For example, in the patent document 2, a transparent film is produced by casting a solution that is obtained by dissolving a thermoplastic resin composition comprising a cycloolefin-based resin and a polystyrene-based polymer in methylene chloride using a compatibilizing agent. However, when a thermoplastic resin composition is dissolved using a compatibilizing agent, compatibility in the thermoplastic resin composition needs to be controlled, and this controlling operation is troublesome. Further, the compatibilizing agent remains in the resulting film, and therefore, film properties are sometimes deteriorated. Moreover, a retardation film produced by the use of the compatibilizing agent is sometimes deteriorated in the appearance of retardation.
If the thermoplastic resin composition is dissolved in methylene chloride without using compatibilizing agent, phase separation takes place to give an opaque film. In the case where the compatibilizing agent is not used, therefore, it is necessary to dissolve the thermoplastic resin composition in toluene having higher dissolving power. However, toluene has a high boiling point and has an evaporation rate of about 20 times the evaporation rate of the methylene chloride, so that in case of a solvent casting method, the drying time becomes long, resulting in a problem of low film productivity.

Patent document 1: Japanese Patent Laid-Open Publication No. 323098/1999
Patent document 2: Japanese Patent Laid-Open Publication No. 194527/2001
Patent document 1: Japanese Patent Laid-Open Publication No. 337222/2001

### DISCLOSURE OF THE INVENTION

### PROBLEMS TO BE SOLVED BY THE INVENTION

The present invention is intended to solve such problems associated with the prior art as described above, and it is an object of the present invention to provide a thermoplastic resin composition which exhibits excellent compatibility of its components with keeping property of low birefringence inherent in the thermoplastic resin composition comprising a cycloolefin-based polymer and a vinyl-based polymer and further has excellent weathering resistance and heat resistance. It is another object of the present invention to provide an optical film comprising such a thermoplastic resin composition and a process for producing the optical film. It is a further object of the present invention to provide a retardation film which keeps excellent appearance of retardation and is excellent in weathering resistance and heat

resistance.

## MEANS FOR SOLVING THE PROBLEMS

In order to solve the above problems, the present inventors have earnestly studied, and as a result, they have found that a thermoplastic resin composition comprising a cycloolefin-based polymer and a vinyl-based polymer having a structural unit derived from p-isopropenylphenol has property of low birefringence and excellent compatibility of its components and is excellent in weathering resistance and heat resistance. Based on the finding, the present invention has been accomplished. The present inventors have further found that a retardation film obtained from the thermoplastic resin composition exhibits excellent appearance of retardation, weathering resistance and heat resistance. Based on the finding, the present invention has been accomplished.

That is to say, the thermoplastic resin composition of the present invention comprises:

(A) a cycloolefin-based polymer, and
(B) a vinyl-based polymer having a structural unit derived from p-isopropenylphenol.

The cycloolefin-based polymer (A) preferably has a structural unit represented by the following formula (1):

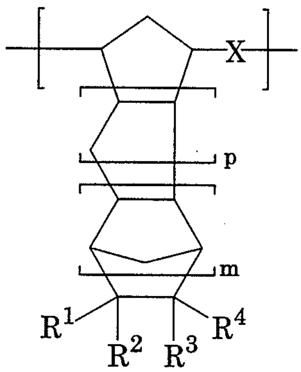

(1)

wherein $R^1$ to $R^4$ are each independently a hydrogen atom, a halogen atom, a substituted or unsubstituted hydrocarbon group of 1 to 30 carbon atoms which may have a linkage containing oxygen, nitrogen, sulfur or silicon, or a polar group; $R^1$ and $R^2$, or $R^3$ and $R^4$ may be bonded to each other to form a monocyclic or polycyclic carbon ring or hetrocyclic ring; X is independently $-CH=CH-$ or $-CH_2CH_2-$; m is 0, 1 or 2; and p is 0 or 1.

The vinyl-based polymer (B) preferably further has a structural unit derived from an aromatic vinyl-based monomer other than p-isopropenylphenol, and more preferably further has a structural unit derived from a vinyl cyanide-based monomer.

The optical film of the present invention comprises:

(A) a cycloolefin-based polymer, and
(B) a vinyl-based polymer having a structural unit derived from p-isopropenylphenol.

The retardation film of the present invention is obtained by stretch-orienting the above-mentioned optical film.

## EFFECT OF THE INVENTION

According to the present invention, a thermoplastic resin composition and an optical film each of which exhibits property of low birefringence and excellent compatibility of its components and is excellent in weathering resistance and heat resistance can be obtained. By stretching the optical film, a retardation film exhibiting excellent appearance of retardation and having excellent weathering resistance and heat resistance can be obtained.

## BRIEF DESCRIPTION OF THE DRAWINGS

Fig. 1 is a general view of a $^{13}C$-NMR spectrum of a copolymer (2) used in the working example.
Fig. 2 is an enlarged view of Fig. 1.
Fig. 3 is a view showing results of differential scanning calorimetry of a transparent film obtained in the working example.

## BEST MODE FOR CARRYING OUT THE INVENTION

The thermoplastic resin composition and the optical film of the invention comprise (A) a cycloolefin-based polymer and (B) a vinyl-based polymer having a structural unit derived from p-isopropenylphenol.

### (A) Cycloolefin-based polymer:

The cycloolefin-based polymer for use in the invention preferably has a structural unit represented by the following formula (1):
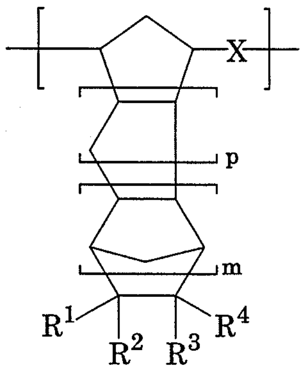

(1)

wherein $R^1$ to $R^4$ are each independently a hydrogen atom, a halogen atom, a substituted or unsubstituted hydrocarbon group of 1 to 30 carbon atoms which may have a linkage containing oxygen, nitrogen, sulfur or silicon, or a polar group; $R^1$ and $R^2$, or $R^3$ and $R^4$ may be bonded to each other to form a monocyclic or polycyclic carbon ring or hetrocyclic ring; X is independently -CH=CH- or $-CH_2CH_2-$; m is 0, 1 or 2; and p is 0 or 1.
As the cycloolefin-based polymer for use in the invention, there can be mentioned, for example,
(i) a ring-opened polymer of a cycloolefin-based monomer represented by the following formula (2) (referred to as a "specific monomer" hereinafter):
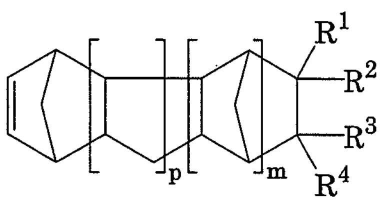

(2)

wherein $R^1$ to $R^4$, m and p have the same meanings as those in the formula (1),

(ii) a ring-opened copolymer of the above specific monomer and a copolymerizable monomer,
(iii) a hydrogenated (co)polymer of the ring-opened (co)polymer (i) or (ii),
(iv) a (co)polymer obtained by cyclizing the ring-opened (co)polymer (i) or (ii) by Friedel-Crafts reaction and then hydrogenating the reaction product, or
(v) a saturated copolymer of the above specific monomer and an unsaturated double bond-containing compound.

As the cycloolefin-based polymer having a structural unit represented by the formula (1), there can be also mentioned, for example,

(vi) a homopolymer obtained by ring-opening copolymerizing a dicyclopentadiene (DCP)-based monomer represented by the following formula (3) and then hydrogenating a 5-member ring:

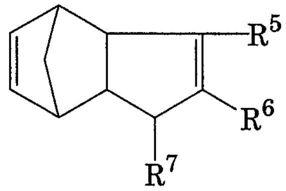

(3)

wherein $R^5$ to $R^7$ are each independently a hydrogen atom, a halogen atom, a substituted or unsubstituted hydrocarbon group of 1 to 30 carbon atoms which may have a linkage containing oxygen, nitrogen, sulfur or silicon, or a polar group,

(vii) a hydrogenated copolymer of a ring-opened copolymer of the above specific monomer and the above DCP-based monomer, or

(viii) a hydrogenated copolymer of a ring-opened copolymer of the above DCP-based monomer and a copolymerizable monomer.

The specific monomer, the copolymerizable monomer, the unsaturated double bond-containing compound and the DCP-based monomer can be each used singly or as a mixture of two or more kinds.

Of the above (co)polymers (i) to (viii), the hydrogenated (co)polymer (iii) or (vii) is preferable, and the hydrogenated (co) polymer (iii) is particularly preferable.

The cycloolefin-based copolymer (A) for use in the invention is desired to have a polar group from the viewpoint of compatibility with the vinyl-based polymer (B).

Next, $R^1$ to $R^7$ in the formulas (1) to (3) are described in detail.

Examples of the halogen atoms include a fluorine atom, a chlorine atom and a bromine atom.

The hydrocarbon group of 1 to 30 carbon atoms is, for example, a group represented by the following formula:

$-(CH_2)m-R'$

wherein R' is a cycloalkyl group, such as cyclopentyl or cyclohexyl, or an aryl group, such as phenyl, naphthyl or anthracenyl, and m is an integer of 1 to 10.

Examples of such hydrocarbon groups include alkyl groups, such as methyl, ethyl and propyl; cycloalkyl groups, such as cyclopentyl and cyclohexyl; alkenyl groups, such as vinyl, allyl and propenyl; alkylidene groups, such as ethylidene and propylidene; aryl groups, such as phenyl, naphthyl and anthracenyl; and aralkyl groups, such as benzyl and 2-phenylethyl. Hydrogen atoms bonded to carbon atoms of these groups may be replaced with halogen atoms, such as fluorine, chlorine and bromine, a phenylsulfonyl group, and a cyano group.

The above substituted or unsubstituted hydrocarbon group may be directly bonded to a ring structure, or may be bonded thereto through a linkage. The linkage is, for example, a divalent hydrocarbon group of 1 to 10 carbon atoms (e.g., alkylene group represented by the formula $-(CH_2)_m-$ wherein m is an integer of 1 to 10), or a linkage containing oxygen, nitrogen, sulfur or silicon (e.g., carbonyl group (-CO-), carbonyloxy group (-COO-), oxycarbonyl group (-O(CO)-), sulfonyl group ($-SO_2-$) sulfonyloxy group ($-SO_2O-$), oxysulfonyl group ($-OSO_2-$), ether bond (-O-), thioether bond (-S-), imino group (-NH-), amide bond (-NHCO-, -CONH-) and linkage containing a silicon atom, which is represented by the following formula:

$-Si(R)_2-$,

$-Si(OR)_2O-$,

$-OSi(R)_2-$, or

$-OSi(OR)_2-$

wherein R is a hydrocarbon group of 1 to 10 carbon atoms, preferably an alkyl group such as methyl or ethyl). A linkage containing two or more of the above linkages is also available.

Examples of the structures wherein the above-mentioned substituted or unsubstituted hydrocarbon group is bonded to a ring structure through the above linkage include an alkoxy group, an acyl group, an alkoxycarbonyl group, an aryloxycarbonyl group, an alkylcarbonyloxy group, an arylcarbonyloxy group, a triorganosilyl group and a triorganosiloxy group.
Specific examples of the alkoxy groups include methoxy and ethoxy; specific examples of the acyl groups include acetyl and benzoyl; specific examples of the alkoxycarbonyl groups include methoxycarbonyl and ethoxycarbonyl; specific examples of the aryloxycarbonyl groups include phenoxycarbonyl, naphthyloxycarbonyl, fluorenyloxycarbnyl and biphenylyloxycarbonyl; specific examples of the alkylcarbonyloxy groups include acetoxy and propionyloxy; specific examples of the arylcarbonyloxy groups include benzoyloxy; specific examples of the triorganosilyl groups include trialkylsilyl groups, such as trimethylsilyl and triethylsilyl, and trialkoxysilyl groups, such as trimethoxysilyl and triethoxysilyl; and specific examples of the triorganosiloxy groups include trialkylsiloxy groups, such as trimethylsiloxy and triethylsiloxy, and trialkoxysiloxy groups, such as trimethoxysiloxy and triethoxysiloxy.
Examples of the polar groups include a hydroxyl group, a cyano group, an amide group, an imide group (=NH), an amino group such as a primary amino group ($-NH_2$), a sulfonic acid group ($-SO_3H$), a sulfino group ($-SO_2H$) and a carboxyl group (-COOH).

<Specific monomer>

Examples of the specific monomers for use in the invention include:

bicyclo[2.2.1]hept-2-ene,
5-methyl-bicyclo[2.2.1]hept-2-ene,
5,5-dimethyl-bicyclo[2.2.1]hept-2-ene,
5,6-dimethyl-bicyclo[2.2.1]hept-2-ene,
5-ethyl-bicyclo[2.2.1]hept-2-ene,
5-cyclohexylbicyclo[2.2.1]hept-2-ene,
5-phenyl-bicyclo[2.2.1]hept-2-ene,
5-(2-naphthyl)-bicyclo[2.2.1]hept-2-ene,
5-vinyl-bicyclo[2.2.1]hept-2-ene,
5-methoxycarbonyl-bicyclo[2.2.1]hept-2-ene,
5-phenoxycarbonyl-bicyclo[2.2.1]hept-2-ene,
5-methoxycarbonylethyl-bicyclo[2.2.1]hept-2-ene,
5-methyl-5-methoxycarbonyl-bicyclo[2.2.1]hept-2-ene,
5-methyl-5-phenoxycarbonyl-bicyclo[2.2.1]hept-2-ene,
5-cyano-bicyclo[2.2.1]hept-2-ene,
5-fluoro-bicyclo[2.2.1]hept-2-ene,
5,5-difluoro-bicyclo[2.2.1]hept-2-ene,
5,6-difluoro-bicyclo[2.2.1]hept-2-ene,
5-chloro-bicyclo[2.2.1]hept-2-ene,
5,5-dichloro-bicyclo[2.2.1]hept-2-ene,
5,6-dichloro-bicyclo[2.2.1]hept-2-ene,
tricyclo[4.3.0.$1^{2,5}$]dec-3-ene,
7-methyl-tricyclo[4.3.0.$1^{2,5}$]dec-3-ene,
8-methyl-tricyclo[4.3.0.$1^{2,5}$]dec-3-ene,
7-ethyl-tricyclo[4.3.0.$1^{2,5}$]dec-3-ene,
7-isopropyl-tricyclo[4.3.0.$1^{2,5}$]dec-3-ene,
7-cyclohexyl-tricyclo[4.3.0.$1^{2,5}$]dec-3-ene,
7-phenyl-tricyclo[4.3.0.$1^{2,5}$]dec-3-ene,
7,7-dimethyl-tricyclo[4.3.0.$1^{2,5}$]dec-3-ene,
7,8-dimethyl-tricyclo[4.3.0.$1^{2,5}$]dec-3-ene,
7-methyl-8-ethyl-tricyclo[4.3.0.$1^{2,5}$]dec-3-ene,
7-methoxycarbonyl-tricyclo[4.3.0.$1^{2,5}$]dec-3-ene,
8-methoxycarbonyl-tricyclo[4.3.0.$1^{2,5}$]dec-3-ene,
7-phenoxycarbonyl-tricyclo[4.3.0.$1^{2,5}$]dec-3-ene,
7-methyl-7-methoxycarbonyl-tricyclo[4.3.0.$1^{2,5}$]dec-3-ene,
8-methyl-8-methoxycarbonyl-tricyclo[4.3.0.$1^{2,5}$]dec-3-ene,
7-fluoro-tricyclo [4.3.0.$1^{2,5}$] dec-3-ene,
8-fluoro-tricyclo [4.3.0.$1^{2,5}$] dec-3-ene,

7-chloro-tricyclo [4.3.0.$1^{2,5}$] dec-3-ene,
8-chloro-tricyclo[4.3.0.$1^{2,5}$]dec-3-ene,
7,7-difluoro-tricyclo[4.3.0.$1^{2,5}$]dec-3-ene,
7,8-difluoro-tricyclo[4.3.0.$1^{2,5}$]dec-3-ene,
7,8-dichloro-tricyclo[4.3.0.$1^{2,5}$]dec-3-ene,
tetracyclo [4.4.0.$1^{2,5}$.$1^{7,10}$] dodec-3-ene,
8-methyl-tetracyclo[4.4.0.$1^{2,5}$.$1^{7,10}$]dodec-3-ene,
8-ethyl-tetracyclo [4.4.0.$1^{2,5}$.$1^{7,10}$] dodec-3-ene,
8-phenyl-tetracyclo [4.4.0.$1^{2,5}$.$1^{7,10}$] dodec-3-ene,
8-methoxycarbonyl-tetracyclo [4.4.0.$1^{2,5}$.$1^{7,10}$]dodec-3-ene,
8-ethoxycarbonyl-tetracyclo [4.4.0.$1^{2,5}$.$1^{7,10}$]dodec-3-ene,
8-n-propoxycarbonyl-tetracyclo [4.4.0.$1^{2,5}$.$1^{7,10}$]dodec-3-ene,
8-isopropoxycarbonyl-tetracyclo [4.4.0.$1^{2,5}$.$1^{7,10}$] dodec-3-ene,
8-n-butoxycarbonyl-tetracyclo[4.4.0.$1^{2,5}$.$1^{7,10}$]dodec-3-ene,
8-phenoxycarbonyl-tetracyclo[4.4.0.$1^{2,5}1^{7,10}$]dodec-3-ene,
8-methyl-8-methoxycarbonyl-tetracyclo[4.4.0.$1^{2,5}$.$1^{7,10}$]dodec-3-ene,
8-methyl-8-ethoxycarbonyl-tetracyclo[4.4.0.$1^{2,5}$.$1^{7,10}$]dodec-3-ene,
8-methyl-8-n-propoxycarbonyl-tetracyclo[4.4.0.$1^{2,5}$.$1^{7,10}$]dodec-3-ene,
8-methyl-8-isopropoxycarbonyl-tetracyclo [4.4.0.$1^{2,5}$.$1^{7,10}$] dodec-3-ene,
8-methyl-8-n-butoxycarbonyl-tetracyclo[4.4.0.$1^{2,5}$.$1^{7,10}$]dododec-3-ene,
8-methyl-8-phenoxycarbonyl-tetracyclo[4.4.0.$1^{2,5}$.$1^{7,10}$]dodec-3-ene,
8-methyl-8-phenyl-tetracyclo[4.4.0.$1^{2,5}$.$1^{2,5}$.$1^{7,10}$]dodec-3-ene,
8-fluoro-tetracyclo[4.4.0.$1^{2,5}$.$1^{7,10}$]dodec-3-ene,
8,8-difluoro-tetracyclo[4.4.0.$1^{2,5}$.$1^{7,10}$]dodec-3-ene,
8,9-difluoro-tetracyclo[4.4.0.$1^{2,5}$.$1^{2,5}$.$1^{7,10}$]dodec-3-ene,
8-chloro-tetracyclo[4.4.0.$1^{2,5}$.$1^{7,10}$]dodec-3-ene,
8,8-dichloro-tetracyclo[4.4.0.$1^{2,5}$.$1^{7,10}$]dodec-3-ene,
8,9-dichloro-tetracyclo[4.4.0$1^{2,5}$.$1^{7,10}$]dodec-3-ene,
8-fluoromethyl-tetracyclo[4.4.0.$1^{2,5}$.$1^{1,10}$]dodec-3-ene,
8-difluoromethyl-tetracyclo[4.4.0.$1^{2,5}$.$1^{7,10}$]dodec-3-ene,
8-trifluoromethyl-tetracyclo[4.4.0.$1^{2,5}$.$1^{7,10}$]dodec-3-ene,
8,8-bis(trifluoromethyl)-tetracyclo[4.4.0.$1^{2,5}$.$1^{7,10}$]dodec-3-ene,
8,9-bis(trifluoromethyl)-tetracyclo[4.4.0.$1^{2,5}$.$1^{7,10}$]dodec-3-ene,
8-methyl-8-trifluoromethyl-tetracyclo [4.4.0.$1^{2,5}$.$1^{7,10}$dodec-3-ene,
pentacyclo [7.4.0.$1^{2,5}$.$1^{9,12}$.$0^{8,13}$] -3-pentadecene,
1-methylbicyclo[2.2.1]hept-2-ene,
7-methylbicyclo[2.2.1]hept-2-ene,
5-ethoxycarbonylbicyclo[2.2.1]hept-2-ene,
5-methyl-5-ethoxycarbonylbicyclo[2.2.1]hept-2-ene,
5-n-butylbicyclo[2.2.1]hept-2-ene,
5-n-hexylbicyclo[2.2.1]hept-2-ene,
5-(3-cyclohexenyl)bicyclo[2.2.1]hept-2-ene,
5-n-octylbicyclo[2.2.1]hept-2-ene,
5-n-decylbicyclo[2.2.1]hept-2-ene,
5-isopropylbicyclo[2.2.1]hept-2-ene,
5-phenyl-5-methylbicyclo[2.2.1]hept-2-ene,
5-(1-naphthyl)bicyclo[2.2.1]hept-2-ene,
5-(1-naphthyl)-5-methylbicyclo[2.2.1]hept-2-ene,
5-(2-naphthyl)-5-methylbicyclo[2.2.1]hept-2-ene,
5-(biphenyl-4-yl)bicyclo[2.2.1]hept-2-ene,
5-(biphenyl-4-yl)-5-methylbicyclo[2.2.1]hept-2-ene,
5-aminomethylbicyclo[2.2.1]hept-2-ene,
5-trimethoxysilylbicyclo[2.2.1]hept-2-ene,
5-triethoxysilylbicyclo[2.2.1]hept-2-ene,
5-tri-n-propoxysilylbicyclo[2.2.1]hept-2-ene,
5-tri-n-butoxysilylbicyclo[2.2.1]hept-2-ene,
5-hydroxymethylbicyclo[2.2.1]hept-2-ene,
2,10-dimethyltetracyclo[4.4.0.$1^{2,5}$.$1^{7,10}$] -3-dodecene,

2, 9-dimethyl tetracyclo [$4.4.0.1^{2,5}.1^{7,10}$] -3-dodecene,
pentacyclo[$6.5.1.1^{3,6}.0^{2,7}.0^{9,13}$]-4-pentadecene,
8-ethylidenetetracyclo[$4.4.0.1^{2,5}.1^{7,10}$]-3-dodecene,
5-chloromethylbicyclo[2.2.1]hept-2-ene,
5-fluoromethylbicyclo[2.2.1]hept-2-ene,
5-trifluoromethylbicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,
5-(1-naphthoxy)carbonylbicyclo[2.2.1]hept-2-ene,
5-(2-naphthoxy)carbonylbicyclo[2.2.1]hept-2-ene,
5-(4-phenylphenoxy)carbonylbicyclo[2.2.1]hept-2-ene,
5-methyl-5-(1-naphthoxy)carbonylbicyclo[2.2.1]hept-2-ene,
5-methyl-5-(2-naphthoxy)carbonylbicyclo[2.2.1]hept-2-ene, and
5-methyl-5-(4-phenylphenoxy)carbonylbicyclo[2.2.1]hept-2-ene.

However, the present invention is not limited to the above examples.

Of the above specific monomers, the specific monomer wherein at least one of $R^1$ to $R^4$ in the formula (2) is a specific polar group represented by the following formula (4) is preferably employed from the viewpoint that a cycloolefin-based polymer (A) exhibiting excellent compatibility with the vinyl-based polymer (B) is obtained.

$$-(CH_2)_nCOOR^8 \qquad (4)$$

wherein n is usually 0 or an integer of 1 to 5, and $R^8$ is a hydrocarbon group of 1 to 15 carbon atoms.

The value of n and the number of carbon atoms of $R^8$ in the formula (4) are preferably as small as possible, because as the value of n becomes smaller or the number of carbon atoms of $R^8$ becomes smaller, the resulting thermoplastic resin composition has a higher glass transition temperature and is more improved in the heat resistance. That is to say, although n is usually 0 or an integer of 1 to 5, it is preferably 0 or 1, and although $R^8$ is usually a hydrocarbon group of 1 to 15 carbon atoms, it is preferably an alkyl group of 1 to 3 carbon atoms.

Further, the specific monomer of the formula (2) wherein an alkyl group is further bonded to a carbon atom to which a polar group represented by the formula (4) is bonded is preferable from the viewpoint that the resulting thermoplastic resin composition and optical film keep good balance between the heat resistance and the moisture (water) resistance. The number of carbon atoms of this alkyl group is preferably 1 to 5, more preferably 1 to 2, particularly preferably 1.

Of such specific monomers, 8-methyl-8-methoxycarbonyltetra[$4.4.0.1^{2,5}.1^{7,10}$]-3-dodecene and 5-methyl-5-methoxycarbonyl-bicyclo[2.2.1]hept-2-ene are preferable from the viewpoint that the resulting thermoplastic resin composition and optical film have excellent heat resistance and a cycloolefin-based polymer (A) exhibiting excellent compatibility with the vinyl-based polymer (B) is obtained.

<DCP-based monomer>

Examples of the DCP-based monomers represented by the formula (3) for use in the invention include:

tricyclo[$4.3.0.1^{2,5}$]deca-3,7-diene,
7-methyl-tricyclo[$4.3.0.1^{2,5}$]deca-3,7-diene,
8-methyl-tricyclo[$4.3.0.1^{2,5}$]deca-3,7-diene,
9-methyl-tricyclo[$4.3.0.1^{2,5}$]deca-3,7-diene,
7,8-dimethyl-tricyclo[$4.3.0.1^{2,5}$]deca-3,7-diene,
7-ethyl-tricyclo[$4.3.0.1^{2,5}$]deca-3,7-diene,
7-cyclohexyl-tricyclo[$4.3.0.1^{2,5}$]deca-3,7-diene,
7-phenyl-tricyclo[$4.3.0.1^{2,5}$]deca-3,7-diene,
7-(4-biphenyl)-tricyclo[$4.3.0.1^{2,5}$]deca-3,7-diene,
7-methoxycarbonyl-tricyclo[$4.3.0.1^{2,5}$]deca-3,7-diene,
7-phenoxycarbonyl-tricyclo[$4.3.0.1^{2,5}$]deca-3,7-diene,
7-methyl-7-methoxycarbonyl-tricyclo[$4.3.0.1^{2,5}$]deca-3,7-diene,
7-fluoro-tricyclo[$4.3.0.1^{2,5}$]deca-3,7-diene,
7,8-difluoro-tricyclo[$4.3.0.1^{2,5}$]deca-3,7-diene, and
7-chloro-tricyclo[$4.3.0.1^{2,5}$]deca-3,7-diene.

However, the present invention is not limited to the above examples.

<Copolymerizable monomer>

The specific monomer and the DCP-based monomer may be each independently ring-opening polymerized, or the specific monomer and the DCP-based monomer may be ring-opening copolymerized, or the specific monomer and/or the DCP-based monomer and another copolymerizable monomer may be ring-opening copolymerized.

Examples of the copolymerizable monomers include cycloolefins, such as cyclobutene, cyclopentene, cycloheptene, cyclooctene and 5-ethylidene-2-norbornene. The number of carbon atoms of each cycloolefin is in the range of preferably 4 to 20, more preferably 5 to 12. The specific monomer and/or the DCP-based monomer may be ring-opening polymerized in the presence of an unsaturated hydrocarbon-based polymer containing a carbon-carbon double bond in the main chain, such as polybutadiene, polyisoprene, a styrene/butadiene copolymer, an ethylene/non-conjugated diene copolymer or a ring-opened metathesis (co)polymer of a norbornene derivative. In this case, the resulting ring-opened copolymer and its hydrogenated copolymer are useful as raw materials of a thermoplastic resin composition having high impact resistance.

<Ring-opening polymerization catalyst>

As a catalyst for use in the ring-opening (co)polymerization (also referred to as a "ring-opening polymerization catalyst" hereinafter), a metathesis catalyst can be mentioned. This metathesis catalyst is a catalyst comprising a combination of:

(a) at least one compound selected from a tungsten-containing compound, a molybdenum-containing compound and a rhenium-containing compound, and
(b) at least one compound selected from compounds containing Group IA elements (e.g., Li, Na, K), Group IIA elements (e.g., Mg, Ca), Group IIB elements (e.g., Zn, Cd, Hg), Group IIIB elements (e.g., B, Al), Group IVA elements (e.g., Ti, Zr) or Group IVB elements (e.g., Si, Sn, Pb) of Deming's periodic table and having at least one said element-carbon bond or at least one said element-hydrogen bond.

Examples of the compounds (a) include compounds described in Japanese Patent Laid-Open Publication No. 240517/1989, such as $WCl_6$, $MoCl_6$ and $ReOCl_3$.
Examples of the compounds (b) include compounds described in Japanese Patent Laid-Open Publication No. 240517/1989, such as $n\text{-}C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane and LiH.

In the present invention, in order to enhance activity of the ring-opening polymerization catalyst, alcohols, aldehydes, ketones, amines and compounds described in Japanese Patent Laid-Open Publication No. 240517/1989 can be added as additives (c).
The metathesis catalyst is used in such an amount that the molar ratio between the amount of the compound (a) and the total amount of the specific monomer and the DCP-based monomer (compound (a):specific monomer and DCP-based monomer) becomes usually 1:500 to 1:100000, preferably 1:1000 to 1:50000. The ratio between the compound (a) and the compound (b) ((a):(b)) is in the range of usually 1:1 to 1:50, preferably 1:2 to 1:30, in terms of a metal atom ratio. The ratio between the additive (c) and the compound (a) ((c):(a)) is in the range of usually 0.005:1 to 15:1, preferably 0.05:1 to 7:1, in terms of a molar ratio.

<Molecular weight modifier>

The molecular weight of the ring-opened (co)polymer can be controlled by polymerization temperature, type of a catalyst and type of a solvent, but in the present invention, control of the molecular weight is preferably carried out by allowing a molecular weight modifier to coexist in the reaction system. Examples of the molecular weight modifiers include $\alpha$-olefins, such as ethylene, propene, 1-butene, 1-pentene, 1-hexene, 1-heptene, 1-octene, 1-nonene and 1-decene; and vinyl aromatic compounds, such as styrene, 4-vinylbiphenyl, 1-vinylnaphthalene and 2-vinylnaphthalene. Of these, 1-butene and 1-hexene are particularly preferable. These molecular weight modifiers can be used singly or as a mixture of two or more kinds. The molecular weight modifier is used in an amount of usually 0.005 to 0.6 mol, preferably 0.02 to 0.5 mol, based on 1 mol of the total amount of the specific monomer and the DCP-based monomer used in the ring-opening (co)polymerization.

<Ring-opening polymerization solvent>

In the ring-opening (co)polymerization, a solvent is preferably used in order to dissolve the specific monomer,

the DCP-based monomer, the ring-opening polymerization catalyst and the molecular weight modifier. Examples of the solvents for use in the ring-opening (co)polymerization include alkanes, such as pentane, hexane, heptane, octane, nonane and decane; cycloalkanes, such as cyclohexane, cycloheptane, cyclooctane, decalin and norbornane; aromatic hydrocarbons, such as benzene, toluene, xylene, ethybenzene and cumene; halogenated alkanes, such as chlorobutane, bromohexane, methylene chloride, dichloroethane, hexamethylene dibromide, chloroform and tetrachloroethylene; halogenated aryls, such as chlorobenzene; saturated carboxylic esters, such as ethyl acetate, n-butyl acetate, isobutyl acetate and methyl propionate; and ethers, such as dibutyl ether, tetrahydrofuran and dimethoxyethane. These solvents can be used singly or as a mixture of two or more kinds. Of these, aromatic hydrocarbons are preferable. The solvent is used in such an amount that the weight ratio between the amount of the solvent and the total amount of the specific monomer and the DCP-based monomer (solvent:specific monomer and DCP-based monomer) becomes usually 1:1 to 10:1, preferably 1:1 to 5:1.

<Ring-opening (co)polymerization reaction>

The ring-opened (co)polymer can be obtained by ring-opening (co)polymerizing the specific monomer and/or the DCP-based monomer, and if necessary, the copolymerizable monomer in the presence of a ring-opening polymerization catalyst and using if necessary a molecular weight modifier and a ring-opening polymerization solvent.

In case of copolymerization of the specific monomer and the DCP-based monomer, it is desirable that the specific monomer in an amount of usually 50 to 99% by weight, preferably 60 to 95% by weight, more preferably 70 to 95% by weight, and the DCP-based monomer in an amount of usually 1 to 50% by weight, preferably 5 to 40% by weight, more preferably 5 to 30% by weight, based on the total 100% by weight of the specific monomer and the DCP-based monomer, are copolymerized.

In case of copolymerization of the specific monomer and/or the DCP-based monomer and the copolymerizable monomer, it is desirable that the specific monomer in an amount of usually not less than 50% by weight and less than 100% by weight, preferably not less than 60% by weight and less than 100% by weight, more preferably not less than 70% by weight and less than 100% by weight, the DCP-based monomer in an amount of usually 0 to 50% by weight, preferably 0 to 40% by weight, more preferably 0 to 30% by weight, and the copolymerizable monomer in an amount of usually more than 0% by weight and not more than 50% by weight, preferably more than 0% by weight and not more than 40% by weight, more preferably more than 0% by weight and not more than 30% by weight, based on the total 100% by weight of the specific monomer, the DCP-based monomer and the copolymerizable monomer, are copolymerized.

As the ring-opened (co)polymer for use in the invention, a homopolymer of the specific monomer or a copolymer of two or more of the specific monomers is most preferable.

<Hydrogenation reaction>

Although the ring-opened (co)polymer obtained by the ring-opening (co)polymerization reaction can be used as it is as the cycloolefin-based polymer (A), this ring-opened (co)polymer has an olefinic unsaturated bond in a molecule, and a problem of heat tinting or the like sometimes takes place. On this account, it is preferable to use a hydrogenated (co)polymer obtained by hydrogenating the olefinic unsaturated bond.

This hydrogenation reaction can be carried out by, for example, adding a hydrogenation catalyst to a solution of the ring-opened (co)polymer and allowing a hydrogen gas of atmospheric pressure to 30 MPa, preferably 3 to 20 MPa, to act thereon at 0 to 200°C, preferably 20 to 180°C.

As the hydrogenation catalyst, a catalyst that is used for usual hydrogenation reaction of an olefinic compound, such as a publicly known heterogeneous or homogeneous catalyst, is employable. Examples of the heterogeneous catalysts include solid catalysts wherein precious metal catalytic substances, such as palladium, platinum, nickel, rhodium and ruthenium, are supported on carriers, such as carbon, silica, alumina and titania. Examples of the homogeneous catalysts include nickel naphthenate/triethylaluminum, nickel acetylacetonate/triethylaluminum, cobalt octenate/n-butyllithium, titanocene dichloride/diethylaluminum monochloride, rhodium acetate, chlorotris(triphenylphosphine)rhodium, dichlorotris(triphenylphosphine)ruthenium, chlorohydrocarbonyltris(triphenylphosphine)ruthenium and dichlorocarbonyltris(triphenylphosphine)ruthenium. Such catalysts may be in the form of a power or particles. The hydrogenation catalyst is used in such an amount that the ratio between the ring-opened (co)polymer and the hydrogenation catalyst (ring-opened (co) polymer:catalyst) becomes usually $1:1\times10^{-6}$ to 1:2 (by weight).

The degree of hydrogenation of the olefinic unsaturated bonds is usually not less than 50%, preferably not less than 70%, more preferably not less than 90%.

By hydrogenating the ring-opened (co)polymer in the above manner, the resulting hydrogenated (co)polymer has excellent heat stability, and deterioration of properties of the (co)polymer caused by heating in the molding process or in the use of the manufactured article can be prevented.

<Saturated copolymer>

In the present invention, in addition to the ring-opened (co)polymer and a hydrogenated (co)polymer thereof, a saturated copolymer of the specific monomer and an unsaturated double bond-containing compound can be also employed as the cycloolefin-based polymer (A). It is desirable that the specific monomer in an amount of usually 0 to 90% by weight, preferably 70 to 90% by weight, more preferably 80 to 90% by weight, and the unsaturated double bond-containing compound in an amount of usually 10 to 40% by weight, preferably 10 to 30% by weight, more preferably 10 to 20% by weight, based on the total 100% by weight of the specific monomer and the unsaturated double bond-containing compound, are copolymerized.

Examples of the unsaturated double bond-containing compounds include olefin-based compounds of 2 to 12 carbon atoms, preferably 2 to 8 carbon atoms, such as ethylene, propylene and butene.

As a catalyst for use in the copolymerization reaction of the specific monomer with the unsaturated double bond-containing compound, a catalyst comprising a vanadium compound and an organoaluminum compound can be mentioned. The vanadium compound is, for example, a vanadium compound represented by the formula $VO(OR)_aX_b$ or $V(OR)_cX_d$ (wherein R is a hydrocarbon group, $0 \leq a \leq 3$, $0 \leq b \leq 3$, $2 \leq a+b \leq 3$, $0 \leq c \leq 4$, $0 \leq d \leq 4$ and $3 \leq c+d \leq 4$) or an electron donor adduct thereof. Examples of the electron donors include oxygen-containing electron donors, such as alcohol, phenols, ketone, aldehyde, carboxylic acid, ester of organic acid or inorganic acid, ether, acid amide, acid anhydride and alkoxysilane; and nitrogen-containing electron donors, such as ammonia, amine, nitrile and isocyanate. The organoaluminum compound is, for example, at least one organoaluminum compound selected from compounds having at least one aluminum-carbon bond or aluminum-hydrogen bond. The proportion of the organoaluminum compound to the vanadium compound in the catalyst is as follows. That is to say, the ratio of the aluminum atom to the vanadium atom (Al/V) is usually not less than 2, preferably 2 to 50, particularly preferably 3 to 20.

Examples of solvents employable in the above copolymerization reaction include alkanes, such as pentane, hexane, heptane, octane, nonane and decane; cycloalkanes, such as cyclohexane and methylcyclohexane; and aromatic hydrocarbons, such as benzene, toluene and xylene, and their halogen derivatives. Of these, cyclohexane is preferable.

<Cycloolefin-based polymer (A)>

The cycloolefin-based polymer (A) for use in the invention has an intrinsic viscosity [η], as measured in a chlorobenzene solution (concentration: 0.5 g/100 ml) at 30°C, of 0.2 to 5.0 dl/g, preferably 0.3 to 4.0 dl/g, particularly preferably 0.35 to 1.5 dl/g. Further, the polymer (A) desirably has a number-average molecular weight (Mn) in terms of polystyrene, as measured by gel permeation chromatography (GPC), of usually 8,000 to 1,000,000, preferably 10,000 to 500,000, more preferably 20,000 to 100,000, and a weight-average molecular weight (Mw) of usually 10,000 to 3,000,000, preferably 20,000 to 1,000,000, more preferably 30,000 to 500,000.

If the molecular weight is too low, strength of the resulting molded article or film sometimes becomes low. If the molecular weight is too high, the solution viscosity becomes too high, and productivity or processability of the thermoplastic resin composition of the invention is sometimes deteriorated.

The cycloolefin-based polymer (A) desirably has a molecular weight distribution (Mw/Mn) of usually 1.5 to 10, preferably 2 to 8, more preferably 2.2 to 5.

The cycloolefin-based polymer (A) has a glass transition temperature (Tg) of usually 110 to 250°C, preferably 115 to 220°C, more preferably 120 to 200°C. If Tg is too low, the heat distortion temperature is lowered, so that a problem of heat resistance is liable to occur, and besides, there sometimes occurs a problem that change in optical properties of the resulting molded article or film with temperature becomes large. On the other hand, if Tg is too high, the processing temperature needs to be raised, and thereby, the thermoplastic resin composition sometimes suffers heat deterioration.

### (B) Vinyl-based polymer

The vinyl-based polymer (B) for use in the invention is a polymer having a structural unit derived from p-isopropenylphenol and is preferably a copolymer further having a structural unit derived from a vinyl-based monomer (b) other then p-isopropenylphenol. Such a vinyl-based polymer (B) can be obtained by copolymerizing p-isopropenylphenol and a vinyl-based monomer (b).

Because the vinyl-based polymer (B) contains a structural unit derived from p-isopropenylphenol, the resulting thermoplastic resin composition and optical film have excellent compatibility and is enhanced in weathering resistance and heat resistance.

<Vinyl-based monomer (b)>

The vinyl-based monomer (b) is, for example, an aromatic vinyl-based monomer, a vinyl cyanide-based monomer, an acrylate-based monomer, a methacrylate-based monomer, a maleic anhydride monomer or a maleimide monomer. Of these, an aromatic vinyl-based monomer or a vinyl cyanide-based monomer is preferably employed, and a combination of an aromatic vinyl-based monomer and a vinyl cyanide-based monomer is particularly preferably employed.

Examples of the aromatic vinyl-based monomers include styrene; alkyl substituted styrenes, such as α-methylstyrene, β-methylstyrene and p-methylstyrene; halogen substituted styrenes, such as 4-chlorostyrene and 4-bromostyrene; hydroxystyrenes, such as p-hydroxystyrene, 2-methyl-4-hydroxystyrene and 3,4-dihydroxystyrene; vinylbenzyl alcohols; alkoxy substituted styrenes, such as p-methoxystyrene, p-t-butoxystyrene and m-t-butoxystyrene; vinylbenzoic acids, such as 3-vinylbenzoic acid and 4-vinylbenzoic acid; 2-phenylacrylic acid; vinylbenzoic esters, such as methyl 4-vinylbenzoate and ethyl 4-vinylbenzoate; 4-vinylbenzyl acetate; 4-acetoxystyrene; vinylacetophenones, such as p-butenylacetophenone and m-isopropenylacetophenone; amidostyrenes, such as 2-butylamidostyrene, 4-methylamidostyrene and p-sulfonamidostyrene; aminostyrenes, such as 3-aminostyrene, 4-aminostyrene, 2-isopropenylaniline and vinylbenzyldimethylamine; nitrostyrenes, such as 3-nitrostyrene and 4-nitrostyrene; cyanostyrenes, such as 3-cyanostyrene and 4-cyanostyrene; vinylphenylacetonitrile; arylstyrenes, such as phenylstyrene; vinylnaphthalene; vinylanthracene; and 1,1-diphenylethylene. Of these, styrene and α-methylstyrene are preferable from the viewpoints of ease of industrial obtaining and low cost.

Further, the vinyl cyanide-based monomer is preferably used because a copolymer of high molecular weight is obtained, and examples thereof include acrylonitrile and methacrylonitrile.

Examples of the acrylate-based monomers include alkyl acrylates, such as methyl acrylate and ethyl acrylate; benzyl acrylate; phenyl acrylate; and hydroxyalkyl acrylates, such as 2-hydroxyethyl acrylate and 3-hydroxypropyl acrylate.

Examples of the methacrylate-based monomers include alkyl methacrylates, such as methyl methacrylate and ethyl methacrylate; benzyl methyacrylate; phenyl methacrylate; and hydroxyalkyl methacrylates, such as 2-hydroxyethyl methacrylate and 3-hydroxypropyl methacrylate.

<Radical polymerization initiator>

When the vinyl-based polymer (B) for use in the invention is synthesized by radical polymerization, a publicly known organic peroxide that generates free radical or an azobis radical polymerization initiator can be employed.

Examples of the organic peroxides include:

diacyl peroxides, such as diacetyl peroxide, dibenzoyl peroxide, diisobutyroyl peroxide, di(2,4-dichlorobenzoyl)peroxide, di(3,5,5-trimethylhexanoyl)peroxide, dioctanoyl peroxide, dilauroyl peroxide, distearoyl peroxide and bis{4-(m-toluoyl)benzoyl}peroxide;

ketone peroxides, such as methyl ethyl ketone peroxide, cyclohexanone peroxide, methylcyclohexanone peroxide and acetylacetone peroxide;

hydroperoxides, such as hydrogen peroxide, t-butyl hydroperoxide, α-cumene hydroperoxide, p-menthane hydroperoxide, diisopropylbenzene hydroperoxide, 1,1,3,3-tetramethylbutyl hydroperoxide and t-hexyl hydroperoxide;

dialkyl peroxides, such as di-t-butyl peroxide, dicumyl peroxide, dilauryl peroxide, α,α'-bis(t-butylperoxy)diisopropylbenzene, 2,5-dimethyl-2,5-bis(t-butylperoxy)hexane, t-butylcumyl peroxide and 2,5-dimethyl-2,5-bis(t-butylperoxy)hexyne-3;

peroxy esters, such as t-butyl peroxyacetate, t-butyl peroxypivalate, t-hexyl peroxypivalate, 1,1,3,3-tetramethylbutyl peroxy-2-ethylhexanoate, 2,5-dimethyl-2,5-bis(2-ethylhexanoylperoxy)hexane, 1-cyclohexyl-l-methylethyl peroxy-2-ethylhexanoate, t-hexyl peroxy-2-ethylhexanoate, t-butyl peroxy-2-ethylhexanoate, t-butyl peroxyisobutyrate, t-butyl peroxymaleate, t-butyl peroxy-3,5,5-trimethylhexanoate, t-butyl peroxylaurate, 2,5-dimethyl-2,5-bis(m-toluoylperoxy)hexane, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneododecanoate, t-butyl peroxybenzoate, t-hexyl peroxybenzoate, bis(t-butylperoxy)isophthalate, 2,5-dimethyl-2,5-bis(benzoylperoxy)hexane, t-butyl peroxy-m-toluoylbenzoate and 3,3',4,4'-tetra(t-butylperoxycarbonyl)benzophenone;

peroxy ketals, such as 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,4-bis(t-butylperoxy)pivalate and 2,2-bis(4,4-dit-butylperoxycyclohexylpropane;

peroxy monocarbonates, such as t-hexyl peroxyisopropyl monocarbonate, t-butyl peroxyisopropyl monocarbonate, t-butyl peroxy-2-ethylhexyl monocarbonate and t-butyl peroxyallyl monocarbonate;

peroxy dicarbonates, such as di-sec-butyl peroxydicarbonate, di-n-propyl peroxydicarbonate, diisopropyl peroxydicarbonate, bis(4-t-butylcyclohexyl) peroxydicarbonate, di-2-ethoxyethyl peroxydicarbonate, di-2-ethylhexyl peroxydicarbonate, di-2-methoxybutyl peroxydicarbonate and di(3-methyl-3-methoxybutyl) peroxydicarbonate; and

other compounds, such as t-butyltrimethylsilyl peroxide.

However, the organic peroxide employable in the invention is not limited to the above-exemplified compounds.

Of the above organic peroxides, polyfunctional peroxy ketals are preferable because a (co)polymer of high molecular weight can be easily obtained. In particular, tetrafunctional 2,2-bis(4,4-di-t-butylperoxycyclohexyl)propane is preferable.

Examples of the azobis radical polymerization initiators include 2,2'-azobisisobutyronitrile, azobisisovaleronitrile, 2,2'-azobis(4-methoxy-2,4-dimethylvaleronitrile), 2,2'-azobis(2,4-dimethylvaleronitrile, 2,2'-azobis(2-methylbutyronitrile), 1,1'-azobis(cyclohexane-1-carbonitrile), 2-(carbamoylazo)isobutyronitrile, 2,2'-azobis[2-methyl-N-{1,1-bis(hydroxymethyl)-2-hydroxyethyl}propionamide], 2,2'-azobis[2-methyl-N-{2-1-hydroxybutyl}propionamide], 2,2'-azobis[2-methyl-N-(2-hydroxyethyl)-propionamide], 2,2'-azobis[N-(2-propenyl)-2-methylpropionamide], 2,2'-azobis(N-butyl-2-methylpropionamide), 2,2'-azobis(N-cyclohexyl-2-methylpropionamide), 2,2'-azobis[2-(5-methyl-2-imidazolin-2-yl)propane]dihydrochloride, 2,2'-azobis[2-(2-imidazolin-2-yl)propane]disulfate·dihydrate, 2,2'-azobis [2-(3,4,5,6-tetrahydropyrimidin-2-yl)propane]dihydrochloride, 2,2'-azobis [2-{1-(2-hydroxyethyl)-2-imidazolin-2-yl}propane] dihydrochloride, 2,2'-azobis [2-(2-imidazolin-2-yl)propane], 2,2'-azobis(2-mehylpropionamidine)dihydrochloride, 2,2'-azobis[N-(carboxyethyl)-2-methyl-propionamidine], 2,2'-azobis(2-methylpropionamidoxime), dimethyl 2,2'-azobisbutyrate, 4,4'-azobis(4-cyanopentanoic acid) and 2,2'-azobis(2,4,4-trimethylpentane). However, the azobis radical polymerization initiator employable in the invention is not limited to the above-exemplified compounds.

<Catalyst>

In the copolymerization reaction of p-isopropenylphenol with the vinyl-based monomer (b), a catalyst may be employed. This catalyst is not specifically restricted, and for example, an anionic polymerization catalyst, a coordination anionic polymerization catalyst and a cationic polymerization catalyst which are publicly known are employable.

<Vinyl-based polymer (B)>

The vinyl-based polymer (B) for use in the invention is obtained by copolymerizing p-isopropenylphenol and the vinyl-based monomer (b) in the presence of the polymerization initiator and the catalyst by a publicly known process, such as bulk polymerization, solution polymerization, precipitation polymerization, emulsion polymerization, suspension polymerization or bulk-suspension polymerization.

It is desirable that in the vinyl-based polymer (B) obtained as above, the structural units derived from p-isopropenylphenol are contained in amounts of usually 0.5 to 30% by weight, preferably 1.5 to 15% by weight, more preferably 1.5 to 10% by weight, and the structural units derived from the vinyl-based monomer (b) are contained in amounts of usually 70 to 99.5% by weight preferably 85 to 98.5% by weight, more preferably 90 to 98.5% by weight, based on the total 100% by weight of the structural units derived from p-isopropenylphenol and the structural units derived from the vinyl-based monomer (b). When the proportion of the structural units derived from p-isopropenylphenol is in the above range, the cycloolefin-based polymer (A) and the vinyl-based polymer (B) are well compatibilized, and the resulting thermoplastic resin composition and optical film exhibit excellent property of low birefringence and is enhanced in the weathering resistance and the heat resistance. Especially in case of a copolymer of p-isopropenylphenol and an aromatic vinyl monomer, it is desirable that the structural units derived from p-isopropenylphenol are contained in amounts of usually 0.5 to 30% by weight preferably 1.5 to 15% by weight, more preferably 1.5 to 10% by weight, and the structural units derived from the aromatic vinyl monomer (b) are contained in amounts of usually 70 to 99.5% by weight preferably 85 to 98.5% by weight, more preferably 90 to 98.5% by weight, based on the total 100% by weight of the structural units derived from p-isopropenylphenol and the structural units derived from the aromatic vinyl monomer.

In the case where the vinyl-based polymer (B) contains a structural unit derived from a vinyl cyanide monomer, it is desirable that the structural units derived from p-isopropenylphenol are contained in amounts of usually 0.5 to 30% by weight, preferably 1.5 to 15% by weight, more preferably 1.5 to 10% by weight, the structural units derived from the vinyl cyanide monomer are contained in amounts of usually 0.5 to 20% by weight, preferably 1 to 10% by weight, more preferably 3 to 6% by weight, and the structural units derived from the vinyl-based monomer (b), preferably structural units derived from the aromatic vinyl-based monomer (b), are contained in the residual amount, i.e., usually 50 to 99% by weight, preferably 75 to 97.5% by weight, more preferably 84 to 99.5% by weight, based on 100% by weight of all the structural units of the vinyl-based polymer (B). If the amounts of the structural units derived from the vinyl cyanide monomer exceed 20% by weight, compositional distribution is produced between the copolymer prepared in the initial stage of the polymerization and the copolymer prepared in the latter stage of the polymerization, and therefore, a transparent copolymer is not obtained occasionally.

The vinyl-based polymer (B) desirably has a number-average molecular weight (Mn) in terms of polystyrene, as measured by gel permeation chromatography (GPC), of usually 3,000 to 350,000, preferably 10,000 to 175,000,

more preferably 10,000 to 90,000, and a weight-average molecular weight (Mw) of usually 500 to 500,000, preferably 5,000 to 250,000, more preferably 20,000 to 100,000.

If the molecular weight is too low, strength of the resulting molded article or film sometimes becomes low. If the molecular weight is too high, the solution viscosity becomes too high, and productivity or processability of the thermoplastic resin composition of the invention is sometimes deteriorated.
The vinyl-based polymer (B) desirably has a molecular weight distribution (Mw/Mn) of usually 1.0 to 10, preferably 1.2 to 5, more preferably 1.2 to 4.

**<Thermoplastic resin composition and optical film>**

In the thermoplastic resin composition and the optical film of the invention, the cycloolefin-based polymer (A) and the vinyl-based polymer (B) are contained in the following proportions. That is to say, based on 100 parts by weight of the cycloolefin-based polymer (A), the vinyl-based polymer (B) is contained in an amount of usually 0.01 to 300 parts by weight, preferably 10 to 300 parts by weight, more preferably 40 to 150 parts by weight. When the amount of the vinyl-based polymer (B) is in the above range, a thermoplastic resin composition and an optical film both of which exhibit property of low birefringence and have excellent weathering resistance and heat resistance can be obtained. Further, strength of a molded article such as a film can be enhanced. If the amount of the vinyl-based polymer (B) is less than the lower limit of the above range, the value of birefringence of the resulting thermoplastic resin composition or optical film is not sufficiently decreased occasionally. If the amount of the vinyl-based polymer (B) exceeds the upper limit of the above range, heat resistance of the resulting thermoplastic resin composition or optical film is sometimes lowered, and transparency of the optical film is sometimes lowered.

In the case where a retardation film is formed from such an optical film, a thermoplastic resin composition containing the vinyl-based polymer (B) in an amount of preferably 10 to 100 parts by weight, more preferably 15 to 75 parts by weight, particularly preferably 20 to 65 parts by weight, based on 100 parts by weight of the cycloolefin-based polymer (A) is desirable. When such a thermoplastic resin composition is used, a retardation film exhibiting excellent appearance of retardation and having excellent wavelength dispersion properties can be obtained.

On the other hand, in the case where the thermoplastic resin composition is applied to an injection molded article, the vinyl-based polymer (B) is contained in an amount of preferably 10 to 300 parts by weight, more preferably 30 to 150 parts by weight, particularly preferably 40 to 100 parts by weight, based on 100 parts by weight of the cycloolefin-based polymer (A).
The thermoplastic resin composition and the optical film may further contain a hydrocarbon resin. Examples of the hydrocarbon resins include $C_5$-based resins, $C_9$-based resins, $C_5$-based/$C_9$-based mixture resins, cyclopentadiene-based resins, olefin/vinyl substituted aromatic compound copolymer-based resins, hydrogenation products of these resins and hydrogenation products of vinyl substituted aromatic resins. The content of the hydrocarbon resin is in the range of usually 0.01 to 50 parts by weight, preferably 0.1 to 25 parts by weight, based on 100 parts by weight of the cycloolefin-based polymer (A).

In order to improve heat deterioration resistance and light resistance, publicly known phenol-based or hydroquinone-based antioxidants, such as 2,6-di-t-butyl-4-methylphenol, 2,2'-dioxy-3,3'-di-t-butyl-5,5'-dimethyldiphenylmethane, tetrakis[methylene-3-(3,5-di-t-butyl-4-hydroxyphenyl)propionato]methane, stearyl-β-(3,5-di-t-butyl-4-hydroxyphenyl) propionate and 1,3,5-trimethyl-2,4,6-tris(3,5-di-t-butyl-4-hydroxybenzyl)benzene; and publicly known phosphorus-based antioxidants, such as tris(4-methoxy-3,5-diphenyl) phosphite, tris(nonylphenyl) phosphite and tris(2,4-di-t-butylphenyl) phosphite, can be contained in the thermoplastic resin composition and the optical film. These antioxidants can be contained singly or in combination of two or more kinds. Further, in order to improve light resistance of the thermoplastic resin composition and the optical film, publicly known ultraviolet light absorbers, such as 2,4-dihydoxybenzophenone, 2-hydroxy-4-methoxybenzophenone and 2,2'-methylenebis[4-(1,1,3,3,-tetramethylbutyl)-6-[2H-benzotriazol-2-yl]phenol]], may be contained. Moreover, a lubricant to improve processability may be added, or publicly known additives, such as flame retardant, anti-fungus agent, colorant, release agent and foaming agent, may be added when needed. These additives can be used singly or in combination of two or more kinds.

In the case where the thermoplastic resin composition of the invention is applied to an injection molded article, the stress optical coefficient ($C_R$) is preferably as small as possible, and specifically it is preferably not more than 1500, particularly preferably not more than 500, because birefringence hardly occurs in the molded article.

**<Process for preparing thermoplastic resin composition>**

The thermoplastic resin composition of the invention can be prepared by, for example, the following processes:

(i) a process comprising mixing the cycloolefin-based polymer (A), the vinyl-based polymer (B) and arbitrary components by the use of a twin-screw extruder, a roll kneading machine or the like, and

(ii) a process comprising adding the vinyl-based polymer (B) to a solution of the cycloolefin-based polymer (A) in an appropriate solvent and mixing them.

**<Process for producing optical film>**

The optical film of the invention can be produced by, for example, molding the thermoplastic resin composition into a film by a publicly known molding method, such as injection molding, compression molding or extrusion molding. The optical film can be also produced by dissolving or dispersing the cycloolefin-based polymer (A) and the vinyl-based polymer (B) in an appropriate solvent and then casting the resulting solution or dispersion by a solvent casting method to form a film. The solvent used herein is not specifically restricted provided that it is usually used for the solvent casting method and is capable of sufficiently dissolving the cycloolefin-based polymer (A) and the vinyl-based polymer (B). For example, a polar solvent or a non-polar solvent is employable. The polar solvent means a solvent having a dielectric constant of not less than 4 and less than 80, and the non-polar solvent means a solvent having a dielectric constant of not less than 1 and less than 4.

Examples of such polar solvents include water (78.5), dimethyl sulfoxide (46.7), acetonitrile (37.5), N,N-dimethylacetamide (37.8), γ-butyrolactone (39.0), dimethylformamide (36.7), methanol (32.6), N-methyl-2-pyrrolidone (32.0), tetramethylurea (23.0), acetone (20.7), 1-propanol (20.1), methyl ethyl ketone (18.5), 2-propanol (18.3), 1-butanol (17.8), 2-methxyethanol (16.9), 2-butanol (15.8), isobutyl alcohol (15.8), 2-ethoxyethanol (13.0), pyridine (12.3), o-dichlorobenzene (9.9), methylene chloride (9.1), tetrahydrofuran (7.6), acetic acid (6.2), ethyl acetate (6.0), chlorobenzene (5.7), chloroform (4.8) and diethyl ether (4.3).

Examples of the non-polar solvents include o-xylene (2.6), toluene (2.4), p-xylene (2.3), benzene (2.3), carbon tetrachloride (2.2), cyclohexane (2.0), cyclopentane (2.0), heptane (1.9), hexane (1.9), nonane (2.0), pentane (1.8), trichloroethylene (3.4) and 2,2,4-trimethylpentane (1.9). The numbers in the parentheses are each a dielectric constant of each solvent.

The above solvents can be used singly or as a mixture of plural kinds. When a mixture of the solvents is used, the dielectric constant of the mixed solvent is desired to be in the range of 2 to 15, preferably 4 to 10. In this case, the value of the dielectric constant of the mixed solvent at 20°C can be estimated from a mixing ratio (by weight) between the solvents, and for example, if a solvent a and a solvent b are mixed and if the weight fractions of the solvents a and b are taken as $W_a$ and $W_b$, respectively, and if the dielectric constants of the solvent a and b at 20°C are taken as $\varepsilon_a$ and $\varepsilon_b$, respectively, the dielectric constant (ε value) of the mixed solvent can be determined by the following formula:

$$\varepsilon \text{ value} = W_a \cdot \varepsilon_a + W_b \cdot \varepsilon_b$$

The solvent has a boiling point, at atmospheric pressure, of usually not higher than 100°C, preferably not higher than 70°C, particularly preferably not higher than 45°C. If a solvent having a boiling point of higher than 100°C is used, the drying time after film formation becomes long, and productivity is sometimes deteriorated. Moreover, a large amount of the solvent remains in the film, and this sometimes deteriorates optical properties such as appearance of retardation. Of the above solvents, methylene chloride is particularly preferably used because it has a low boiling point. If a conventional thermoplastic resin composition comprising a cycloolefin-based polymer and a vinyl-based polymer is dissolved in methylene chloride without using a compatibilizing agent, then the solution is subjected to film formation and thereafter methylene chloride is evaporated, there occurs a problem that the resulting film becomes opaque. In case of the thermoplastic resin composition of the invention, however, a transparent film can be obtained even if a compatibilizing agent is not used. As a result, drying at a temperature lower than the temperature of the conventional drying becomes possible, and heat deterioration in the film production process can be prevented.

The concentration of the thermoplastic resin composition in the solution (sometimes referred to as a "film-forming solution" hereinafter) used in the solvent casting method is in the range of usually 0.1 to 70% by weight, preferably 1 to 50% by weight, more preferably 10 to 35% by weight. If the concentration is too low, it becomes difficult to obtain a film having a desired thickness, and when the solvent is removed by drying, foaming is liable to take place with evaporation of the solvent, and hence, it sometimes becomes difficult to obtain a film of excellent surface smoothness. On the other hand, if the concentration is too high, the viscosity of the film-forming solution becomes too high, and hence, it sometimes becomes difficult to obtain a film of uniform thickness and uniform surface profile.

The viscosity of the film-forming solution at room temperature is in the range of usually 1 to 1,000,000 (mPa·s), preferably 10 to 100,000 (mPa·s), more preferably 100 to 80,000 (mPa·s), particularly preferably 1,000 to 60,000 (mPa·s). The temperature in the preparation of the film-forming solution may be room temperature or higher than room temperature, and it has only to be a temperature at which the cycloolefin-based polymer (A) and the vinyl-based polymer (B) are homogeneously dissolved or dispersed by mixing them sufficiently.

To the film-forming solution, a colorant such as a dye or a pigment can be properly added when needed, and by the use of the colorant, a colored film can be obtained.
In order to improve surface smoothness of the resulting film, a leveling agent may be added to the film-forming solution. As the leveling agent, any of various agents generally used is employable, and examples of such leveling agents include fluorine-based nonionic surface active agents, special acrylic resin-based leveling agents and silicon-based leveling agents.
The film-forming solution prepared as above is cast by pouring or applying the solution onto an appropriate carrier, whereby a layer of the film-forming solution is formed on the carrier. As the carrier, a metal drum, a steel belt, a polyester film made of polyethylene terephthalate (PET) or polyethylene naphthalate (PEN), a polytetrafluoroethylene belt or the like is employable.
If a polyester film is used as a carrier, the polyester film may be a surface-treated film. As a method of surface treatment, there can be mentioned a hydrophilic treatment method generally performed, such as a method of forming a layer of an acrylic resin or a sulfonic acid base-containing resin on a surface of a polyester film by coating or laminating or a method of increasing hydrophilicity of a film surface by corona discharge treatment or the like.
When a metal drum, a steel belt, a polyester film or the like whose surface has been subjected to sand matting treatment or embossing treatment to form irregularities on the surface is used as a carrier, the irregularities of the surface of the carrier are transferred onto the surface of the resulting film, whereby a film having a light diffusion function can be produced. As a matter of course, by directly subjecting a film to sand matting treatment, the film can be imparted with a light diffusion function.
Examples of methods to apply the film-forming solution include a method of using a die or a coater, a spraying method, a brushing method, a roll coating method, a spin coating method and a dipping method.
By applying the film-forming solution repeatedly, a film thickness or a surface smoothness of the resulting film can be controlled.
The solution layer formed on the carrier is then subjected to solvent removal treatment by drying or the like. As the drying method, a drying method generally used, such as a method of passing the carrier with the solution layer through a drying oven by means of a large number of rollers, can be utilized. However, if bubbles are produced with evaporation of the solvent in the drying process, properties of the resulting film are markedly deteriorated, and therefore, in order to avoid this, it is preferable that the drying process is divided into plural (two or more) steps and the temperature or the air flow in each step are controlled.
Thereafter, a film obtained by the above drying is peeled from the carrier, whereby an optical film of the invention can be obtained.
In the optical film thus obtained, the amount of a residual solvent is usually not more than 10% by weight, preferably not more than 5% by weight, more preferably not more than 1% by weight, particularly preferably not more than 0.5% by weight. If the amount of the residual solvent in the film exceeds the upper limit of the above range, dimensional change of the film with time becomes large when the film is used, so that such an amount is undesirable. Moreover, because of the residual solvent, the glass transition temperature is lowered, and heat resistance is also lowered occasionally, so that such an amount is undesirable.
In the case where the optical film is used as a raw film of the retardation film of the invention, it becomes particularly necessary occasionally to properly control the amount of the residual solvent in the film to a value of the above range. More specifically, in order to allow the film to stably and uniformly exhibit retardation by stretch orientation, the amount of the residual solvent in the film is desired to be in the range of usually 10 to 0.1% by weight, preferably 5 to 0.1% by weight, more preferably 1 to 0.1% by weight. By allowing a slight amount of a solvent to remain in the film, stretch orientation can be sometimes facilitated, or control of appearance of retardation can be sometimes facilitated.
The optical film has a thickness of usually 0.1 to 3,000 μm, preferably 0.1 to 1,000 μm, more preferably 1 to 500 μm, most preferably 5 to 300 μm. If the film is too thin, handling properties of the film are sometimes lowered. If the film is too thick, it sometimes becomes difficult to wind up the film into a roll.
The thickness distribution of the optical film is in the range of ±20%, preferably ±20%, more preferably ±5%, particularly preferably ±3%, based on the mean value. The degree of variability of the thickness based on 1 cm is usually not more than 10%, preferably not more than 5%, more preferably not more than 1%, particularly preferably not more than 0.5%. By controlling the thickness distribution of the film to a value of the above range, occurrence of non-uniformity of retardation in a film obtained by stretch-orienting the optical film can be prevented.
By subjecting the optical film of the invention to stretching (stretch orientation), the optical film becomes a retardation film. For example, when an optical film composed of the thermoplastic resin composition of the invention is subjected to free end monoaxial stretching in a stretch ratio of 1.1 to 5.0 times at a stretching temperature ranging from a glass transition temperature of the thermoplastic resin composition to a temperature of the glass transition temperature + 20°C, a retardation film having a NZ coefficient of not less than 1.1 can be obtained. The free end monoaxial stretching used herein means a method of stretching a film in a monoaxial direction without applying tension to other directions than the monoaxial direction to be stretched (stretching direction). The NZ coefficient is a value defined by the following

formula with the proviso that the film stretching direction is taken as an x-axis, the in-plane perpendicular direction to the x-axis is taken as a y-axis, and the direction perpendicular to the x-axis and the y-axis (film thickness direction) is taken as a z-axis.

$$\text{NZ coefficient} = (n_x - n_z)/(n_x - n_y)$$

($n_x$: refractive index in the x-axis direction, $n_y$: refractive index in the y-axis direction, $n_z$: refractive index in the z-axis direction)

The optical film from which a retardation film having a NZ coefficient of the above range is obtained is, for example, an optical film composed of a thermoplastic resin composition consisting of a vinyl-based polymer obtained by terpolymerization of p-isopropenylphenol, an aromatic vinyl monomer and a vinyl cyanide monomer, and a cycloolefin-based resin. More specifically, there can be mentioned an optical film composed of a thermoplastic resin composition consisting of a vinyl terpolymer of p-isopropenylphenol/styrene/acrylonitrile and a cycloolefin-based resin. In this vinyl-based copolymer, proportions of the structural units are desirably as follows. That is to say, it is desirable that based on 100% by weight of all the structural units, the proportion of the structural units derived from p-isopropenylphenol is in the range of 0.5 to 30% by weight, the proportion of the structural units derived from the aromatic vinyl monomer is in the range of 50 to 99% by weight, and the proportion of the structural units derived from the vinyl cyanide monomer is in the range of 0.5 to 20% by weight. In the above thermoplastic resin composition, the compounding ratio of the vinyl-based polymer to the cycloolefin resin (vinyl-based polymer/cycloolefin-based resin, by weight) is preferably in the range of 10/90 to 50/50.

## <Retardation film>

The retardation film of the invention can be produced by subjecting the above-mentioned optical film to stretching (stretch orientation). By the stretching, molecular chains of the (co)polymer for forming the film are regularly oriented in a given direction, whereby a function of imparting retardation to the transmitted light is exhibited. The expression "regularly oriented" used herein means that molecular chains of a high-molecular compound are regularly oriented in the monoaxial direction or the biaxial directions of the film plane or in the thickness direction of the film, while in the case where a usual high-molecular compound (polymer) is molded into a film by melt extrusion, casting or the like, molecular chains of the high-molecular compound are not arranged in a specific direction but are at random though it depends upon a magnitude of film strain produced in the molding process. The degrees of regularity of the orientation of the high-molecular compound are various and can be controlled by the stretching conditions.

The stretching method is specifically a monoaxial stretching method or a biaxial orientation method publicly known. That is to say, examples of such stretching methods include crosswise monoaxial stretching by tentering, compression stretching between rolls, lengthwise monoaxial stretching using two pairs of rolls having different circumferences, biaxial orientation combining crosswise monoaxial stretching and lengthwise monoaxial stretching, and stretching by inflation.

In case of the monoaxial stretching method, the stretching rate is in the range of usually 1 to 5,000%/min, preferably 50 to 1,000%/min, more preferably 100 to 1,000%/min, particularly preferably 100 to 500%/min.

As the biaxial orientation method, a method of carrying out stretching operations in two directions intersecting each other at the same time and a method of carrying out monoaxial stretching and then carrying out stretching in a direction different from the initial stretching direction are available. In these methods, the intersecting angle between the two stretching axes is not specifically restricted because it is determined according to the desired properties, but it is usually in the range of 120 to 60 degrees. The stretching rates in the stretching directions may be the same or different and are each in the range of usually 1 to 5,000%/min, preferably 50 to 1,000%/min, more preferably 100 to 1,000%/min, particularly preferably 100 to 500%/min.

The temperature in the stretching is not specifically restricted. However, if the glass transition temperature of the optical film (thermoplastic resin composition) used is taken as Tg, the stretching temperature is desired to be in the range of usually not lower than Tg and not higher than Tg+30°C, preferably not lower than Tg and not higher than Tg+20°C, more preferably not lower than Tg and not higher than Tg+10°C. When the stretching temperature is in the above range, large retardation can be exhibited, occurrence of non-uniformity of retardation can be inhibited, and control of index ellipsoid can be easily made, so that such a temperature is favorable.

The stretch ratio is not specifically restricted because it is determined according to various properties such as desired retardation. However, it is in the range of usually 1.01 to 10 times, preferably 1.03 to 5 times, more preferably 1.03 to 3 times.

Although the film having been stretched in the above manner may be cooled as it is at room temperature, it is desirable that the film is held in an atmosphere of about not lower than Tg-100°C and not higher than Tg for at least 10 seconds, preferably 30 seconds to 60 minutes, more preferably 1 minute to 60 minutes, to perform heat setting and then cooled to room temperature, whereby a retardation film less suffering a change in retardation of transmitted light with time and having stable retardation properties is obtained.

In the retardation film obtained as above, molecules are oriented by stretching, and thereby, retardation is imparted to the transmitted light. The absolute value of the retardation can be controlled by controlling the stretch ratio, the film thickness before stretching, etc. For example, even if films have the same thickness as each other before stretching, a film having a higher stretch ratio tends to provide a larger absolute value of retardation of the transmitted light. Therefore, by changing the stretch ratio, a retardation film capable of imparting desired retardation to the transmitted light can be obtained. Further, even if films have the same stretch ratio as each other, a film having a larger thickness before stretching tends to provide a larger absolute value of retardation of the transmitted light. Therefore, by changing the film thickness before stretching, a retardation film capable of imparting desired retardation to the transmitted light can be obtained.

For example, by subjecting an optical film composed of the thermoplastic resin composition of the invention to free end monoaxial stretching in a stretch ratio of 1.1 to 5.0 times at a stretching temperature ranging from a glass transition temperature of the thermoplastic resin composition to a temperature of the glass transition temperature + 20°C, a retardation film having a NZ coefficient of usually not less than 1.10, preferably not less than 1.12, can be obtained. In the retardation film produced by stretching under the above conditions, a retardation value ($R_{400}$) at a wavelength of 400 nm, a retardation value ($R_{550}$) at a wavelength of 550 nm and a retardation value ($R_{800}$) at a wavelength of 800 nm desirably satisfy a relationship of $R_{400}<R_{550}<R_{800}$.

The value of retardation imparted by the retardation film obtained as above to the transmitted light is determined according to the use application and is not determined indiscriminately. However, when the retardation film is used for a liquid crystal display device, an electroluminescence display device or a wavelength plate of laser optical system, the retardation value is in the range of usually 1 to 10,000 nm, preferably 10 to 2,000 nm, more preferably 15 to 1,000 nm.

The retardation of a light transmitted by the film preferably has high uniformity, and specifically, the dispersion at a light wavelength of 550 nm is desired to be usually in the range of ±20%, preferably ±10%, more preferably ±5%. If the dispersion of retardation is out of the range of ±20%, a liquid crystal device using the film suffers color non-uniformity, and there sometimes occurs a problem that the performance of the display main body is lowered.

Further, the retardation of a light transmitted by the film depends upon a wavelength of the transmitted light. The retardation film of the invention preferably has reciprocal wavelength dispersion properties. Specifically, the ratio ($R_{660}/R_{550}$) of a retardation value ($R_{660}$) at a wavelength of 660 nm to a retardation value ($R_{550}$) at a wavelength of 550 nm is usually not less than 1.02, preferably not less than 1.03. A retardation film having a $R_{660}/R_{550}$ ratio of less than the above-mentioned lower limit sometimes lacks sharpness.

Furthermore, the retardation appearance (birefringence value) $\Delta n$ of the retardation film of the invention is usually not less than 0.0005, preferably not less than 0.0010, more preferably not less than 0.0015, at a wavelength of 550 nm. If the $\Delta n$ is less than the above-mentioned lower limit, the film thickness needs to be increased in order that the film imparts retardation to the transmitted light, and in case of a film of a large film thickness, light transmittance is lowered, or the drying time in the film production process is prolonged, and as a result, film productivity is sometimes lowered.

The retardation film of the invention can be used as a single film or a laminate of two or more films, or can be used by laminating the film on a transparent substrate. Further, the film can be used also by laminating it on another film, a sheet or a substrate.

For laminating the retardation film, an adhesive or a bonding material is employable. As the adhesive or the bonding material, one having excellent transparency is preferably employed. Examples of such adhesives or bonding materials include adhesives, such as natural rubbers, synthetic rubbers, a vinyl acetate/vinyl chloride copolymer, polyvinyl ether, acrylic resins and modified polyolefin-based resins; curing type adhesives obtained by adding a curing agent, such as an isocyanate group-containing compound, to the above resins having a functional group such as a hydroxyl group or an amino group; polyurethane-based adhesives for dry laminate; synthetic rubber-based adhesives; and epoxy-based adhesives.

In order to enhance workability in laminating the retardation film on another film, a sheet, a substrate or the like, an adhesive layer or a bonding material layer may be laminated in advance on the retardation film. In the case where the adhesive layer or the bonding material layer is laminated, the aforesaid adhesive or bonding material is employable as the adhesive or the bonding material.

The optical film and the retardation film of the invention can be used for various liquid crystal display devices, such as cell phones, digital information terminals, pocket bells, navigation systems, on-vehicle liquid crystal displays, liquid crystal monitors, dimmer panels, displays for OA machines and displays for AV machines, electroluminescence display devices, touch panels, etc. Moreover, they are useful as wavelength plates used for recording/reproducing apparatuses of optical

discs, such as CD, CD-R, MD, MO and DVD.

**EXAMPLES**

The present invention is further described with reference to the following examples, but it should be construed that the invention is in no way limited to those examples.

<Measuring and evaluation methods>

(1) Intrinsic viscosity [η]

A chlorobenzene solution having a concentration of 0.5 g/100 ml was prepared, and an intrinsic viscosity was measured under the conditions of 30°C.

(2) Molecular weight

Using HLC-8220 gel permeation chromatograph (GPC, manufactured by Tosoh Corporation, column: TSKgelg7000HxL, TSKgelGMHxL, TSKgelGMHxL and TSKgelG2000xL, manufactured by Tosoh Corporation), a number-average molecular weight (Mn), a weight-average molecular weight (Mw) and a molecular weight distribution (Mw/Mn), in terms of polystyrene, were measured in a tetrahydrofuran (THF) solvent

(3) Glass transition temperature

Using DSC6200 (manufactured by Seiko Instruments Inc.), a glass transition temperature was measured in a stream of nitrogen at a heating rate of 20°C/min. Tg was determined in the following manner. A maximum peak temperature (A point) of derivative differential scanning calories and a temperature (B point) obtained by subtracting 20°C from the maximum peak temperature were plotted on a differential scanning calorie curve, and the glass transition temperature was determined as an intersecting point between a tangent on a base line having the B point as a starting point and a tangent on a base line having the A point as a starting point.

(4) Reaction conversion ratio

Into an aluminum foil weighed in advance, 1.0 g of a solution obtained after polymerization was withdrawn, and the solution was heated on a hot plate at 220°C for 30 minutes to evaporate a volatile content, whereby a solids concentration was determined. Then, a reaction conversion ratio of a monomer was measured in accordance with the following formula.

Reaction conversion ratio (%) = (solids concentration × total weight of solution - weight of catalyst used)/total weight of monomer used × 100

(5) Compositional analysis

In d-chloroform, 1.0 g of a sample was dissolved, and to the resulting solution, 50 mg of chromium(III) acetylacetonate was added. Then, using a nuclear magnetic resonance spectrometer (NMR, AVANCE500 manufactured by Bruker), $^{13}$C-NMR of a vinyl-based copolymer was measured. From the peak (153 ppm) area intensity of an aromatic ring carbon derived from p-ispropenylphenol and the peak (142-150 ppm) area intensity of quaternary carbon derived from styrene, proportions of structural units derived from styrene and structural units derived from p-isopropenylphenol were calculated.

(6) Stress optical coefficient ($C_R$)

A stress optical coefficient was measured by a publicly known method (Polymer Journal, vol. 27, No. 9, pp. 943-950 (1995)).

That is to say, the resulting thermoplastic resin composition was subjected to film formation using a methylene chloride casting method and then vacuum dried at 100°C for 24 hours to prepare a film. Thereafter, 4 specimens each having a size of 0.5 mm × 5 mm × 50 mm were prepared, and to the specimens were each applied different loads (4 points) of 10 to 300 g. Then, the specimens were placed in a heating oven at a temperature of Tg of the specimens + 20°C and allowed to stand for 30 minutes to stretch them. Thereafter, the heating oven was slowly cooled to room temperature while the loads were applied, and retardation values of the stretched specimens were each measured in the following manner.

A retardation value (550 nm) was measured by the use of an automatic birefringence meter (manufactured by Oji Scientific Instruments, KOBRA-21ADH). A stress (σ) and a birefringence value (ΔN) of each specimen were determined in accordance with the following formulas, and from an inclination of a σ-ΔN plot, $C_R$ was determined.

$$\sigma = F/(d \cdot w)$$

(F: load, d: thickness of specimen after stretching, w: width of specimen after stretching)

$$\Delta N = Re/d$$

(Re: retardation value), d: thickness of specimen after stretching)

$$C_R = \Delta N/\sigma \text{ (unit: Br} = 10^{-12}\text{Pa}^{-1})$$

(7) Retardation value of injection molded product

A retardation value (at 550 nm) of a gate center of a specimen for birefringence evaluation was measured by the use of an automatic birefringence meter (manufactured by Oji Scientific Instruments, KOBRA-21ADH).

(8) Water resistance (measurement of water absorption)

A specimen for water resistance evaluation was dried at 100°C for 24 hours, and then a weight $W_0$ of the specimen was measured. Subsequently, the specimen was immersed in water at 23°C for 24 hours, and then a weight $W_1$ of the specimen was measured, followed by calculation of water absorption from the following formula.

$$\text{Water absorption (\%)} = [(W_1 - W_0)/W_0] \times 100$$

(9) Transparency (measurement of total light transmittance)

A total light transmittance of a specimen for transparency evaluation was measured in accordance with JIS K7105 (measuring method A) using a haze meter (manufactured by Suga Test Instrument Co., Ltd., HGM-2DP).

(10) Haze

A haze of the resulting film was measured in according with JIS K7105 (measuring method A) using a haze meter (manufactured by Suga Test Instrument Co., Ltd., HGM-2DP).

(11) Retardation value, birefringence value, reciprocal wavelength dispersion and NZ coefficient of retardation film

Retardation value at 550 nm and 660 nm and a NZ coefficient of a film after stretching were measured by the use of an automatic birefringence meter (manufactured by Oji Scientific Instruments, KOBRA-21ADH). The NZ coefficient is a value determined by the following formula.

$$\text{NZ coefficient} = (n_x - n_z)/(n_x - n_y)$$

($n_x$: refractive index in x-axis direction, $n_y$: refractive index in y-axis direction, $n_z$: refractive index in z-axis direction) A birefringence value and a reciprocal wavelength dispersion of the retardation film were determined by the following formulas.

$$\text{Birefringence value } (\Delta n) = R_{550}/d$$

$$\text{Reciprocal wavelength dispersion} = R_{660}/R_{550}$$

($R_{550}$, $R_{660}$: retardation value at wavelengths of 550 nm and 660 nm, d: film thickness)

(12) Tear strength

Tear strength of a film after stretching was measured in accordance with JIS K6772.

(13) Film colorability

A film after stretching was held at 80°C for 1000 hours and then subjected to heat resistance test. Yellowness (YI) of the film was measured before and after the test in accordance with JIS K 7105 using a spectrophotometer (manufactured by Suga Test Instrument Co., Ltd.). Then, a change in YI between before and after the test (YI = YI after the test - YI before the test) was calculated.

(14) Amount of residual solvent

The resulting film was dissolved in a solvent, and an amount of a residual solvent was measured by gas chromatography.

[Preparation Example 1]

In a reaction vessel purged with nitrogen, 100 parts by weight of 8-methyl-8-methoxycarbonyltetracyclo [4.4.0.$1^{2,5}$.$1^{7,10}$]-3-dodecene represented by the following formula as a specific monomer, 4 parts by weight of 1-hexane as a molecular weight modifier and 200 parts by weight of toluene as a solvent were placed, and they were heated to 80°C.
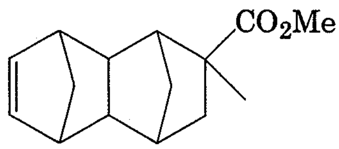

Then, 0.12 part by weight of a toluene solution of triethylaluminum (concentration: 0.6 mol/l) and 0.37 part by weight of a toluene solution of methanol-modified $WCl_6$ (concentration: 0.025 mol/l) were added, and reaction was performed at 80°C for 1 hour to obtain a polymer.
The resulting solution of the polymer was placed in an autoclave, then 200 parts by weight of toluene as a solvent and 0.06 part by weight of RuHCl (CO) $[P(C_6H_5)_3]_3$ as a hydrogenation catalyst were added, and thereafter, purging with nitrogen was carried out three times. Then, a hydrogen gas was introduced into the reaction vessel to adjust the pressure to 8.0 MPa. Thereafter, the reaction vessel was heated to 165°C, and with maintaining the pressure at 10 MPa, reaction was performed at 165°C for 3 hours to obtain a hydrogenation product. The hydrogenation product was reprecipitated with methanol, and the precipitate was recovered and then dried to obtain a cycloolefin-based polymer (1).
This cycloolefin-based polymer (1) had an intrinsic viscosity [η] of 0.78 dl/g, a weight-average molecular weight (Mw) of $11.5\times10^4$, a molecular weight distribution (Mw/Mn) of 3.3 and a glass transition temperature (Tg) of 167°C. The

degree of hydrogenation of the cycloolefin-based polymer (1) was determined by $^1$H-NMR measurement, and as a result, not less than 99.9% of the olefinic unsaturated bonds in the main chain had been hydrogenated.

[Preparation Example 2]

In a reaction vessel, 96.8 parts by weight of styrene, 3.2 parts by weight of p-isopropenylphenol, 30 parts by weight of cyclohexane and 0.64 part by weight of 2,2-bis(4,4-di-tert-butylperoxycyclohexyl)propane (available from Nippon Oils and Fats Corporation, Pertetra A) were placed. Through the contents in the reaction vessel, a stream of nitrogen was bubbled for 10 minutes, and then reaction was performed at 95°C for 8 hours to obtain a styrene/p-isopropenylphenol copolymer (2).

The copolymer (2) had a reaction conversion ratio, as measured by a solids content measurement, of 98%, a weight-average molecular weight (Mw) of 78000, a number-average molecular weight (Mn) of 35500, a molecular weight distribution (Mw/Mn) of 2.2 and a glass transition temperature (Tg) of 103°C. A $^{13}$C-NMR spectrum of the copolymer (2) is shown in Fig. 1 (general view) and Fig. 2 (enlarged view). Peaks of carbons (i) to (iv) of the aromatic ring derived from p-isopropenylphenol were confirmed to be present at 115.2 ppm, 122.6 ppm, 138.4 ppm and 153.1 ppm, respectively. From integral values of the peak of the carbon (iv) and a peak (145.2 ppm) of quaternary carbon derived from polystyrene, composition of the copolymer was determined. As a result, a ratio of structural units derived from styrene/structural units derived from p-isopropenylphenol in the copolymer (2) was 96.8/3.2 (by weight).

[Preparation Example 3]

In a reaction vessel, 91.5 parts by weight of styrene, 4.5 parts by weight of p-isopropenylphenol, 4.0 parts by weight of acrylonitrile and 0.61 part by weight of 2,2'-azobis(2,4-dimethylvaleronitrile) (available from Wako Laboratory Chemicals, V-65) were placed. Through the contents in the reaction vessel, a stream of nitrogen was bubbled for 10 minutes, and then reaction was performed at 55°C for 7 hours. After the reaction was completed, the reaction product was reprecipitated with a large amount of methanol to obtain a styrene/p-isopropenylphenol/acrylonitrile copolymer (3).

The copolymer (3) had a reaction conversion ratio, as measured by a solids content measurement, of 73%, Mw of 72700, Mn of 40200, Mw/Mn of 1.81 and a glass transition temperature (Tg) of 110°C. From a $^{13}$C-NMR spectrum of the copolymer (3), composition of the copolymer was determined. As a result, a ratio of structural units derived from styrene/structural units derived from p-isopropenylphenol/structural units derived from acrylonitrile in the copolymer (3) was 91.4/4.5/4.1 (by weight).

[Preparation Example 4]

A styrene/p-tert-butoxystyrene copolymer was obtained in the same manner as in Preparation Example 2, except that instead of p-isopropenylphenol, p-tert-butoxystyrene was used in an amount equimolar with styrene. To the copolymer, 0.2 part by weight of p-toluenesulfonic acid was added, and deblocking reaction was performed at 100°C for 4 hours to obtain a styrene/p-hydroxystyrene copolymer (4).

The copolymer (4) had Mw of 83000, Mn of 37700, Mw/Mn of 2.2 and a glass transition temperature (Tg) of 103°C.

**[Example 1]**

The polymer (1) and the copolymer (2) were melt-mixed in a mixing ratio of 65/35 (polymer (1)/copolymer (2), by weight) at 300°C to obtain a thermoplastic resin composition. A stress optical coefficient ($C_R$ value) of the thermoplastic resin composition was measured in the aforesaid manner.

The thermoplastic resin composition was dried by a vacuum dryer under the conditions of 100°C and 4 hours, and then injection molded by means of an injection molding machine "SG75M-S" (manufactured by Sumitomo Heavy Industries, Ltd., cylinder diameter: 28 mm, clamping force: 75 t) under the conditions of a resin temperature of 300°C, a mold temperature of 130°C and an injection rate of 100 mm/sec and under the conditions such that the hopper and the cylinder were filled with nitrogen. Thus, a specimen for birefringence evaluation (injection molded strip having width of 60 mm, length of 80 mm and thickness of 1 mm), a specimen for water resistance evaluation (width: 40 mm, length: 80 mm, thickness: 3 mm) and a specimen for transparency evaluation (thickness: 3 mm) were prepared. These specimens were evaluated on retardation value at 550 nm, water resistance and transparency. The results are set forth in Table 1.

Further, the polymer (1) and the copolymer (2) were dissolved in a ratio of 65/35 (polymer (1)/copolymer (2), by weight) in methylene chloride to prepare a solution having a concentration of 30% by weight, and the solution was subjected to film formation using a solvent casting method and then vacuum dried at 100°C for 48 hours to prepare a transparent film having a film thickness of 175 μm. The result of differential scanning calorimetry (DSC) of the transparent film is shown in Fig. 3. This transparent film had single Tg of 137°C and a haze of 0.1. From this, it was confirmed that

the polymer (1) and the copolymer (2) had been compatibilized with each other.

The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=142°C), a stretching rate of 60 mm/min (120%/min) and a chuck distance of 50 mm, to obtain a film having a film thickness of 123 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1.

**[Example 2]**

A thermoplastic resin composition was obtained in the same manner as in Example 1, except that instead of the copolymer (2), the copolymer (3) was mixed with the polymer (1) in a mixing ratio of 65/35 (polymer (1)/copolymer (3), by weight). A stress optical coefficient ($C_R$ value) of the thermoplastic resin composition was measured in the aforesaid manner.
From the thermoplastic resin composition, various specimens were prepared in the same manner as in Example 1, and the specimens were evaluated on retardation value at 550 nm, water resistance and transparency. The results are set forth in Table 1.

Further, a transparent film having a film thickness of 175 μm was obtained in the same manner as in Example 1, except that instead of the copolymer (2), the copolymer (3) was dissolved in a ratio of 65/35 (polymer (1)/copolymer (3), by weight) in methylene chloride. The transparent film had single Tg of 138°C and a haze of 0.1. From this, it was confirmed that the polymer (1) and the copolymer (3) had been compatibilized with each other.

The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=143°C), a stretching rate of 60 mm/min (120%/min) and a chuck distance of 50 mm, to obtain a film having a film thickness of 121 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1.

**[Example 3]**

A thermoplastic resin composition was obtained in the same manner as in Example 2, except that the mixing ratio of the polymer (1) to the copolymer (3) was changed to 55/45 (polymer (1)/copolymer (3), by weight). A stress optical coefficient ($C_R$ value) of the thermoplastic resin composition was measured in the aforesaid manner.
From the thermoplastic resin composition, various specimens were prepared in the same manner as in Example 1, and the specimens were evaluated on retardation value at 550 nm, water resistance and transparency. The results are set forth in Table 1.

Further, a transparent film having a film thickness of 175 μm was obtained in the same manner as in Example 2, except that the ratio of the polymer (1) to the copolymer (3) was changed to 55/45 (polymer (1)/copolymer (3), by weight). The transparent film had single Tg of 123°C and a haze of 0.1. From this, it was confirmed that the polymer (1) and the copolymer (3) had been compatibilized with each other.

The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=128°C), a stretching rate of 60 mm/min (120%/min) and a chuck distance of 50 mm, to obtain a film having a film thickness of 123 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1.

**[Comparative Example 1]**

A stress optical coefficient ($C_R$ value) of the polymer (1) was measured in the aforesaid manner.
From the polymer (1), various specimens were prepared in the same manner as in Example 1, and the specimens were evaluated on retardation value at 550 nm, water resistance and transparency. The results are set forth in Table 1.
Further, the polymer (1) was dissolved in methylene chloride to prepare a solution having a concentration of 30% by weight, and the solution was subjected to film formation using a solvent casting method and then vacuum dried at 100°C for 48 hours to prepare a transparent film having a film thickness of 175 μm. This transparent film had Tg of 167°C and

a haze of 0.1.

The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=172°C), a stretching rate of 60 mm/min (120%/min) and a chuck distance of 50 mm, to obtain a film having a film thickness of 123 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1.

## [Comparative Example 2]

A thermoplastic resin composition was obtained in the same manner as in Example 1, except that instead of the copolymer (2), the copolymer (4) was mixed with the polymer (1) in a mixing ratio of 65/35 (polymer (1)/copolymer (4), by weight). A stress optical coefficient ($C_R$ value) of the thermoplastic resin composition was measured in the aforesaid manner.

From the thermoplastic resin composition, various specimens were prepared in the same manner as in Example 1, and the specimens were evaluated on retardation value at 550 nm, water resistance and transparency. The results are set forth in Table 1.

Further, a transparent film having a film thickness of 175 μm was obtained in the same manner as in Example 1, except that instead of the copolymer (2), the copolymer (4) was dissolved in a ratio of 65/35 (polymer (1)/copolymer (4), by weight) in methylene chloride. The transparent film had single Tg of 132°C and a haze of 0.1. From this, it was confirmed that the polymer (1) and the copolymer (4) had been compatibilized with each other.

The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=137°C), a stretching rate of 60 mm/min (120%/min) and a chuck distance of 50 mm, to obtain a film having a film thickness of 119 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1.

## [Comparative Example 3]

A thermoplastic resin composition was obtained in the same manner as in Example 1, except that instead of the copolymer (2), commercially available polystyrene (polystyrene manufactured by PS-Japan, Mw: 219,000, Mn: 81,300) was used. Because the thermoplastic resin composition was opaque, the stress optical coefficient could not be measured.

From the thermoplastic resin composition, various specimens were prepared in the same manner as in Example 1, and the specimens were evaluated on water resistance and transparency. The results are set forth in Table 1. Because these specimens were opaque, the retardation value at 550 nm could not be measured.

Further, a film having a film thickness of 175 μm was obtained in the same manner as in Example 1, except that instead of the copolymer (2), commercially available polystyrene (polystyrene manufactured by PS-Japan, Mw: 219,000, Mn: 81,300) was used. The film was opaque and had two Tg, namely, Tg of 167°C which was derived from the polymer (1) and Tg of 101°C which was derived from polystyrene, and a haze of 94. From this, it was confirmed that the polymer (1) and polystyrene had not been compatibilized with each other, and optical properties could not be measured. From this, it was confirmed that when commercially available polystyrene was used, the resulting film could not be used as an optical material.

The film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of 172°C, a stretching rate of 60 mm/min (120%/min) and a chuck distance of 50 mm, to obtain a film having a film thickness of 122 μm. The film after stretching was evaluated on tear strength and amount of a residual solvent. The results are set forth in Table 1.

## [Comparative Example 4]

A thermoplastic resin composition was obtained in the same manner as in Example 1, except that instead of the copolymer (2), commercially available polystyrene containing 7% by weight of maleic anhydride (manufactured by NOVA Chemicals Japan Ltd., Dylark, grade: D232, Mw: 207,000, Mn: 104,000) was used. Because the thermoplastic resin composition was opaque, the stress optical coefficient could not be measured.

From the thermoplastic resin composition, various specimens were prepared in the same manner as in Example 1, and the specimens were evaluated on water resistance and transparency. The results are set forth in Table 1. Because these specimens were opaque, the retardation value at 550 nm could not be measured.
Further, a film having a film thickness of 175 μm was obtained in the same manner as in Example 1, except that instead of the copolymer (2), commercially available polystyrene containing 7% by weight of maleic anhydride (manufactured by NOVA Chemicals Japan Ltd., Dylark, grade: D232, Mw: 207,000, Mn: 104,000) was used. The film was opaque and had two Tg, namely, Tg of 167°C which was derived from the polymer (1) and Tg of 120°C which was derived from maleic anhydride-containing polystyrene, and a haze of 88. From this, it was confirmed that the polymer (1) and the maleic anhydride-containing polystyrene had not been compatibilized with each other, and optical properties could not be measured.
The film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of 172°C, a stretching rate of 60 mm/min (120%/min) and a chuck distance of 50 mm, to obtain a film having a film thickness of 123 μm. The film after stretching was evaluated on tear strength and amount of a residual solvent. The results are set forth in Table 1.

**[Comparative Example 5]**

A transparent film having a film thickness of 175 μm was obtained in the same manner as in Comparative Example 4, except that film formation was carried out using a toluene solvent instead of methylene chloride. The transparent film had single Tg of 140°C and a haze of 0.5. From this, it was confirmed that the polymer (1) and the 7wt% maleic anhydride-containing polystyrene had been compatibilized with each other.
The transparent film was cut into a size of 10 mm × 80 mm, and the thus cut film was stretched in a stretch ratio of 2.0 times by the use of an Instron tensile tester (5567 type) equipped with a constant temperature bath through free end monoaxial stretching under the conditions of a stretching temperature of Tg+5°C (=145°C), a stretching rate of 60 mm/min (120%/min) and a chuck distance of 50 mm, to obtain a film having a film thickness of 124 μm. The film after stretching was evaluated on haze, retardation value at 550 nm, birefringence value at 550 nm, reciprocal wavelength dispersion ($R_{660}/R_{550}$), NZ coefficient, tear strength, film colorability after heat resistance test and amount of a residual solvent. The results are set forth in Table 1. This stretched film had a large amount of residual toluene, and appearance of retardation was markedly deteriorated.
Table 1

| | Ex.1 | Ex.2 | Ex.3 | Comp. EX.1 | Comp. EX.2 | Comp. EX.3 | Comp. EX.4 | Comp. EX. 5 |
|---|---|---|---|---|---|---|---|---|
| Polymer (1) | 65 | 65 | 55 | 100 | 65 | 65 | 65 | 65 |
| Copolymer (2) | 35 | | | | | | | |
| Copolymer (3) | | 35 | 45 | | | | | |
| Copolymer (4) | | | | | 35 | | | |
| Polystyrene | | | | | | 35 | | |
| Maleic anhydride-containing polystyrene | | | | | | | 35 | 35 |
| Molded article | | | | | | | | |
| $C_R$ value | 1050 | 1120 | 600 | 2200 | 1020 | IM | IM | IM |
| Retardation value (550nm, unit:mm) | 120 | 150 | 50 | 250 | 120 | IM | IM | IM |

(continued)

| Molded article | | | | | | | | |
|---|---|---|---|---|---|---|---|---|
| Water absorption (%) | 0.2 | 0.28 | 0.2 | 0.4 | 0.21 | 0.2 | 0.2 | 0.2 |
| Total light transmittance (%) | 94 | 94 | 94 | 94 | 94 | 2 | 3 | 3 |
| Retardation film | | | | | | | | |
| HAZE(%) | 0.1 | 0.1 | 0.1 | 0.1 | 0.1 | 94 | 89 | 0.5 |
| Retardation value(550nm, unit:mm) | 221 | 211 | 64 | 492 | 202 | IM | IM | 36 |
| Birefringence value (550nm) | 0.00180 | 0.00174 | 0.00052 | 0.00400 | 0.00170 | IM | IM | 0.00029 |
| $R_{660}/R_{550}$ | 1.02 | 1.02 | 1.07 | 0.98 | 1.02 | IM | IM | 1.02 |
| NZ coefficient | 1.01 | 1.13 | 1.15 | 1.02 | 1.00 | IM | IM | 1.04 |
| Tear strength (gf) | 25 | 35 | 40 | 18 | 22 | 2 | 3 | 20 |
| YI before test | 0.1 | 0.1 | 0.1 | 0.1 | 0.1 | IM | IM | 0.1 |
| YI after test | 0.2 | 0.2 | 0.2 | 0.2 | 4.6 | IM | IM | 5 |
| ΔYI | 0.1 | 0.1 | 0.1 | 0.1 | 4.5 | IM | IM | 4.9 |
| Amount of residual solvent (ppm) | 1 ppm or less | 1 ppm or less | 1 ppm or less | 1 ppm or less | 1 ppm or less | 1 ppm or less | 1 ppm or less | 1220 |
| IM: Measurement could not be made because of opacity. | | | | | | | | |

## INDUSTRIAL APPLICABILITY

The thermoplastic resin composition of the invention is excellent in weathering resistance and heat resistance and can be preferably applied to general optical uses, and besides, it can be preferably used by processing it into films or sheets. In particular, film formation using methylene chloride having a low boiling point is possible, so that in case of production of optical films by a solvent casting method, drying at low temperatures becomes possible and heat deterioration in the film production can be prevented, and the thermoplastic resin composition is optimum for uses requiring stretching, for example, optical films such as retardation films. Moreover, the resulting optical films are excellent in weathering resistance and heat resistance, so that they can be applied to uses whose usage environmental conditions are relatively severe, such as navigation systems and on-vehicle liquid crystal displays.

As shown in Example 2 and Example 3, when the optical film of the invention is subjected to free end monoaxial stretching, the NZ coefficient becomes more than 1.1, so that even if the film is not subjected to biaxial orientation, a stretched film having a NZ coefficient of not less than 1.1 can be obtained. From the above result, it can be seen that also in the case where the optical film of the invention is subjected to width-constraint monoaxial stretching or biaxial stretching, a stretched film having a larger NZ coefficient than a stretched film obtained from an optical film composed of a conventional cycloolefin ring-opened (co)polymer is obtained. Accordingly, by the use of the optical film of the invention, a stretched film having a larger NZ coefficient than a stretched film obtained from a conventional optical film can be easily produced, and a NZ coefficient of a stretched film can be easily controlled without using special stretching technique.

Further, the stretched film of the invention exhibits specific wavelength dispersion properties (reciprocal wavelength dispersion properties) of $R_{400}<R_{550}<R_{800}$. These wavelength dispersion properties can be controlled by composition of the vinyl-based (co)polymer and compounding ratio between the cycloolefin-based resin and the vinyl-based

(co)polymer, and there can be provided by the invention a material exhibiting wavelength dispersion properties of desired birefringence (or retardation) required for molded articles such as stretched films.

## Claims

**1.** A thermoplastic resin composition comprising:

(A) a cycloolefin-based polymer, and
(B) a vinyl-based polymer having a structural unit derived from p-isopropenylphenol.

**2.** The thermoplastic resin composition as claimed in claim 1, wherein the cycloolefin-based polymer (A) has a structural unit represented by the following formula (1):

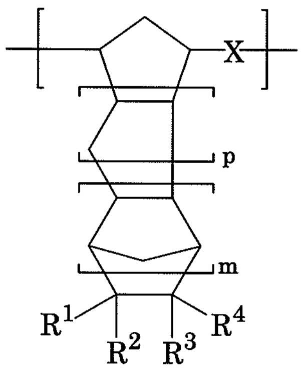

(1)

wherein $R^1$ to $R^4$ are each independently a hydrogen atom, a halogen atom, a substituted or unsubstituted hydrocarbon group of 1 to 30 carbon atoms which may have a linkage containing oxygen, nitrogen, sulfur or silicon, or a polar group; $R^1$ and $R^2$, or $R^3$ and $R^4$ may be bonded to each other to form a monocyclic or polycyclic carbon ring or hetrocyclic ring; X is independently -CH=CH- or $-CH_2CH_2-$; m is 0, 1 or 2; and p is 0 or 1.

**3.** The thermoplastic resin composition as claimed in claim 1, wherein the vinyl-based polymer (B) further has a structural unit derived from an aromatic vinyl-based monomer other than p-isopropenylphenol.

**4.** The thermoplastic resin composition as claimed in claim 3, wherein the vinyl-based polymer (B) further has a structural unit derived from a vinyl cyanide-based monomer.

**5.** An optical film comprising:

(A) a cycloolefin-based polymer, and
(B) a vinyl-based polymer having a structural unit derived from p-isopropenylphenol.

**6.** An optical film comprising a thermoplastic resin composition comprising (A) a cycloolefin-based polymer and (B) a vinyl-based polymer having a structural unit derived from p-isopropenylphenol, and having the following properties:

when the optical film is subjected to free end monoaxial stretching in a stretch ratio of 1.1 to 5.0 times at a stretching temperature ranging from a glass transition temperature of the thermoplastic resin temperature + 20°C, a NZ coefficient of the resulting film becomes not less than 1.1.

**7.** A retardation film obtained by stretch-orienting the optical film of claim 5 or 6.

**8.** A retardation film obtained by subjecting an optical film comprising a thermoplastic resin composition which comprises (A) a cycloolefin-based polymer and (B) a vinyl-based polymer having a structural unit derived from p-isopropenylphenol to free end monoaxial stretching in a stretch ratio of 1.1 to 5.0 times at a stretching temperature ranging from a glass transition temperature of the thermoplastic resin composition to a temperature of the glass transition temperature + 20°C, and having a NZ coefficient of not less than 1.1.

Figure. 1

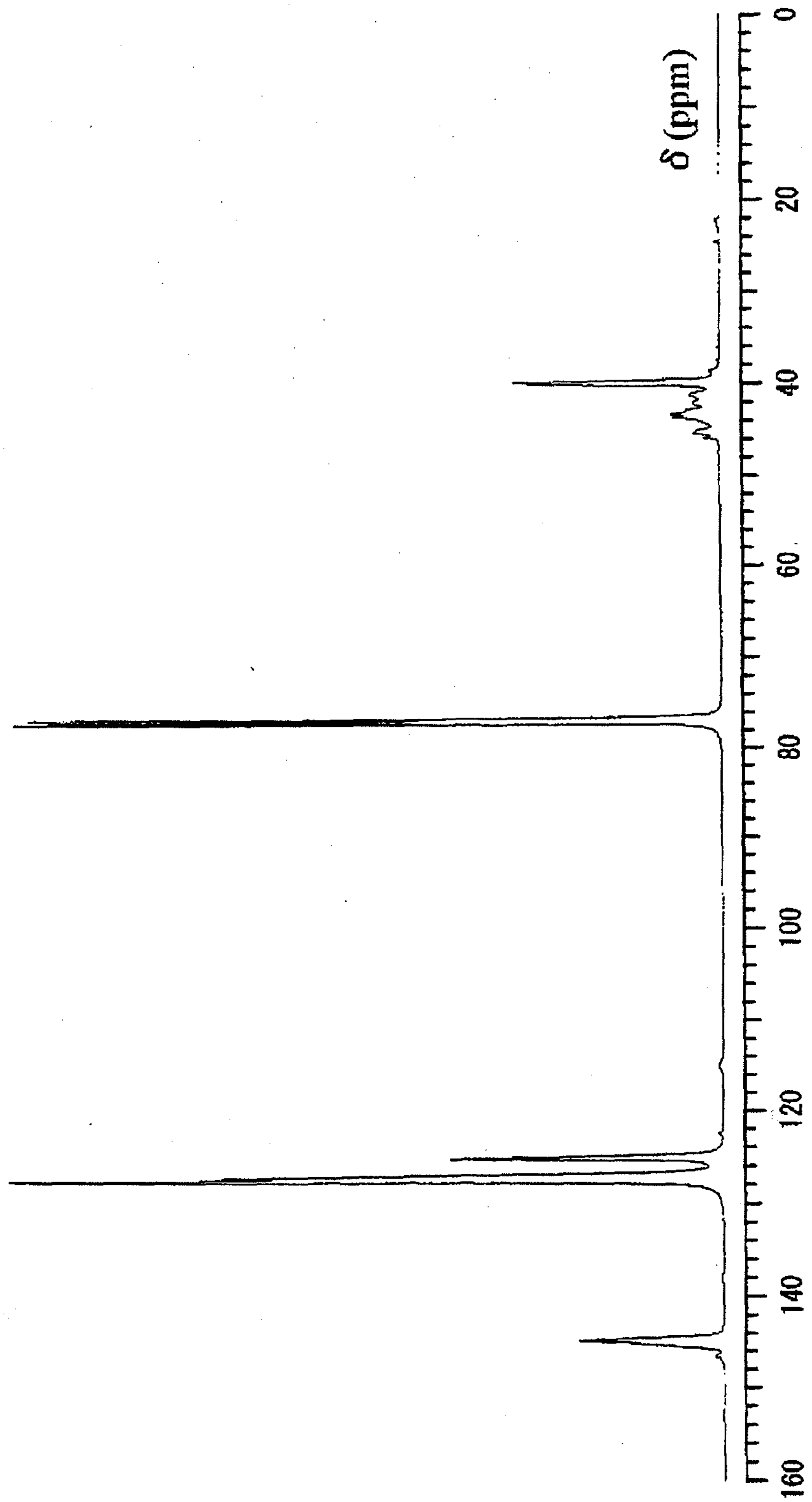

Figure. 2

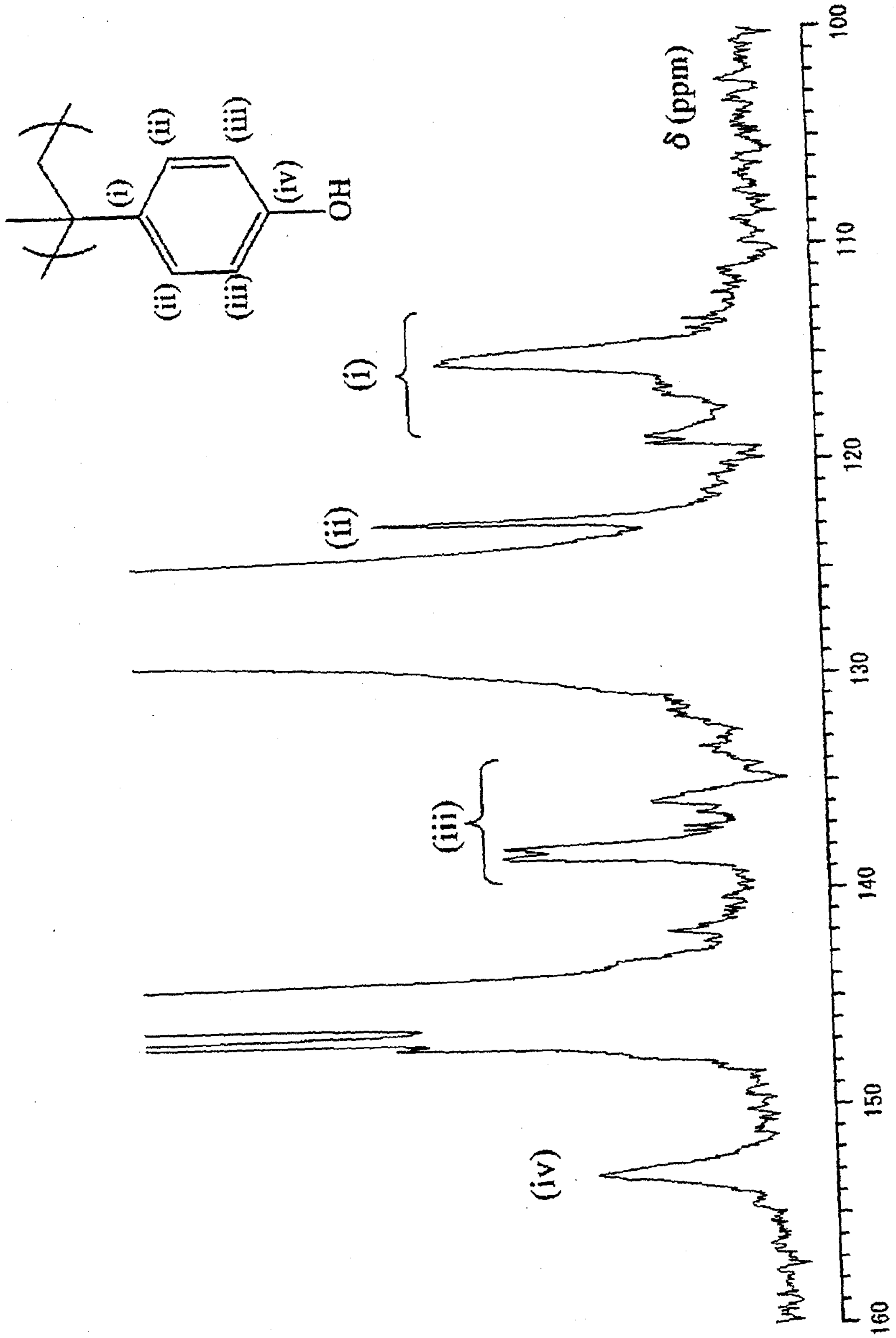

Figure. 3

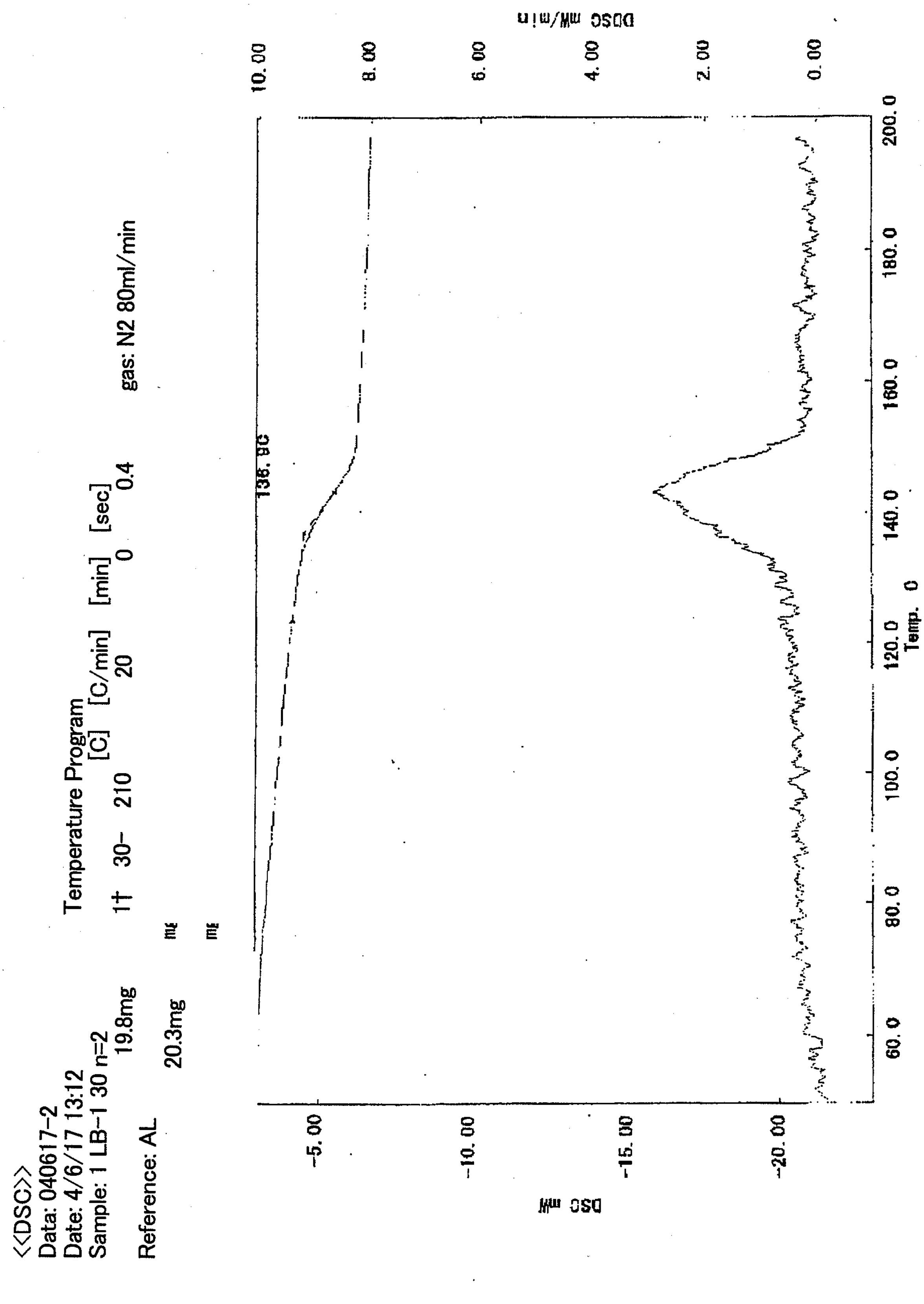

<<DSC>>
Data: 040617-2
Date: 4/6/17 13:12
Sample: 1 LB-1 30 n=2 19.8mg
Reference: AL 20.3mg
Temperature Program
[C] [C/min] [min] [sec]
1† 30- 210 20 0 0.4
gas: N2 80ml/min
136.9C
DSC mW
DDSC mW/min
Temp. C
-5.00
-10.00
-15.00
-20.00
10.00
8.00
6.00
4.00
2.00
0.00
60.0
80.0
100.0
120.0
140.0
160.0
180.0
200.0

**INTERNATIONAL SEARCH REPORT**

International application No.
PCT/JP2005/017535

A. CLASSIFICATION OF SUBJECT MATTER
*C08L65/00* (2006.01), *C08L25/00* (2006.01), *C08L33/18* (2006.01), *G02B5/30* (2006.01)

According to International Patent Classification (IPC) or to both national classification and IPC

B. FIELDS SEARCHED

Minimum documentation searched (classification system followed by classification symbols)
*C08L65/00* (2006.01), *C08L25/00* (2006.01), *C08L33/18* (2006.01), *G02B5/30* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-187994 A (Hitachi Kasei Kabushiki Kaisha), 05 July, 2002 (05.07.02), Full text (Family: none) | 1-8 |
| A | JP 11-323098 A (JSR Corp.), 26 November, 1999 (26.11.99), Full text (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 November, 2005 (08.11.05) | Date of mailing of the international search report<br>22 November, 2005 (22.11.05) |
| Name and mailing address of the ISA/<br>Japanese Patent Office<br>Facsimile No. | Authorized officer<br><br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11323098 A
- JP 2001194527 A
- JP 2001337222 A
- JP 1240517 A

### Non-patent literature cited in the description

- *Polymer Journal,* 1995, vol. 27 (9), 943-950